(19) 

Europäisches
Patentamt
European
Patent Office
Office européen
des brevets

(11)  **EP 4 769 135 A1**

(12)  **EUROPEAN PATENT APPLICATION**
published in accordance with Art. 153(4) EPC

(43) Date of publication:
**01.07.2026  Bulletin 2026/27**

(21) Application number: **24943237.8**

(22) Date of filing: **11.12.2024**

(51) International Patent Classification (IPC):
**G06F 9/451** *(2018.01)*

(86) International application number:
**PCT/CN2024/138618**

(87) International publication number:
**WO 2025/256085 (18.12.2025 Gazette 2025/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.06.2024  CN 202410749564**

(71) Applicant: HUAWEI TECHNOLOGIES CO., LTD.
**Shenzhen, Guangdong 518129 (CN)**

(72) Inventors:
• ZHANG, Yundie
  **Shenzhen, Guangdong 518129 (CN)**

• NA, Meili
  **Shenzhen, Guangdong 518129 (CN)**
• SU, Da
  **Shenzhen, Guangdong 518129 (CN)**
• BI, Sheng
  **Shenzhen, Guangdong 518129 (CN)**
• MO, Shiyi
  **Shenzhen, Guangdong 518129 (CN)**

(74) Representative: **Epping - Hermann - Fischer
Patentanwaltsgesellschaft mbH
Schloßschmidstraße 5
80639 München (DE)**

(54)  **INTERFACE PROCESSING METHOD, ELECTRONIC DEVICE AND RELATED APPARATUS**

(57)  This application provides an interface processing method, an electronic device, and a related apparatus. In the method, after the electronic device performs saturation processing on a color of each channel, because the color of each channel changes, a color change amount exists. Different from the conventional technology, in embodiments of this application, for different colors of each channel, the electronic device may further perform enhancement processing to different degrees on the color change amount of each channel. To be specific, for different colors of each channel, the electronic device may increase or decrease change amounts of different colors to different degrees, to adjust saturation of different colors and improve color penetrability. In this way, color fusion between an image and a foreground UI element can be improved, thereby improving immersion of browsing the image and the foreground UI element by a user.

```
┌─────────────────────────────────────────────┐
│  Step 1A: Lower-layer image blurring processing │
└─────────────────────────────────────────────┘
                      │
                      ▼
┌─────────────────────────────────────────────┐
│  Step 2A: Grayscale brightening or darkening   │
└─────────────────────────────────────────────┘
                      │
                      ▼
┌─────────────────────────────────────────────┐
│  Step 3A: Saturation processing                │
└─────────────────────────────────────────────┘
                      │
                      ▼
┌─────────────────────────────────────────────┐
│  Step 3B: Enhancement processing               │
└─────────────────────────────────────────────┘
                      │
                      ▼
┌─────────────────────────────────────────────┐
│  Step 4A: Masking                              │
└─────────────────────────────────────────────┘
```

FIG. 4

## Description

This application claims priority to Chinese Patent Application No. 202410749564.9, filed with the China National Intellectual Property Administration on June 11, 2024 and entitled "INTERFACE PROCESSING METHOD, ELECTRONIC DEVICE, AND RELATED APPARATUS", which is incorporated herein by reference in its entirety.

## TECHNICAL FIELD

Embodiments of this application relate to the field of user interface technologies, and in particular, to an interface processing method, an electronic device, and a related apparatus.

## BACKGROUND

Many user interfaces (user interface, UI) display images and foreground UI elements. For example, the foreground UI element may include but is not limited to an icon, a text, and the like.

Currently, to enhance an association between the foreground UI element and the image, an electronic device performs processing such as blurring and semi-transparency on the image, and sets the foreground UI element to a preset color, for example, black. In such a method, although a user may see an approximate color of the image through blurring, semi-transparency, and the like, because different colors have different penetrability, color fusion between the image and the foreground UI element is poor, and the user has weak immersion of browsing the image and the foreground UI element in the interface.

## SUMMARY

Embodiments of this application provide an interface processing method, an electronic device, and a related apparatus. After performing saturation processing on a color of each channel, the electronic device further performs enhancement processing to different degrees on a color change amount of each channel, to adjust saturation of different colors and improve color penetrability. In this way, color fusion between an image and a foreground UI element can be improved, thereby improving immersion of browsing the image and the foreground UI element by a user.

According to a first aspect, an embodiment of this application provides an interface processing method. The interface processing method may be performed by an electronic device or a chip in the electronic device. The following provides descriptions by using the electronic device as an example. In the method, after the electronic device performs saturation processing on a color of each channel, because the color of each channel changes, a color change amount exists. Different from the conventional technology, in this embodiment of this application, for different colors of each channel, the electronic device may further perform enhancement processing to different degrees on the color change amount of each channel. To be specific, for different colors of each channel, the electronic device may increase or decrease change amounts of different colors to different degrees, to adjust saturation of different colors and improve color penetrability. In this way, color fusion between an image and a foreground UI element can be improved, thereby improving immersion of browsing the image and the foreground UI element by a user.

The following describes, with reference to a specific scenario example, the interface processing method provided in this embodiment of this application.

Scenario 1: No background panel exists under a first UI element.

The electronic device may obtain information about a to-be-displayed interface. The interface includes an image and a first user interface UI element located at an upper layer of the image, a first pixel in the first UI element corresponds to a second pixel in the image, and the information includes a color of each channel of the second pixel.

The electronic device may process the color of each channel of the second pixel based on a first saturation parameter corresponding to the first UI element, to obtain a first color change amount of each channel of the second pixel with respect to the processing. Different from the conventional technology, in this embodiment of this application, after performing saturation processing on the first UI element, the electronic device may further enhance the first color change amount based on a first enhancement parameter corresponding to the first UI element, to obtain a second color change amount of each channel of the second pixel. The first enhancement parameter includes an enhancement coefficient of each channel, and enhancement coefficients of different channels are different.

The electronic device may determine a color of each channel of the first pixel based on the color of each channel of the second pixel and the second color change amount. Further, the electronic device displays the first UI element based on the color of each channel of the first pixel.

In this embodiment of this application, for the first UI element having no background panel, after performing saturation processing on the color of each channel, for different colors of each channel, the electronic device may further perform enhancement processing to different degrees on the color change amount of each channel, to improve color penetrability. In this way, color fusion between an image and a foreground UI element can be improved, thereby improving immersion of browsing the image and the foreground UI element by a user.

In a possible implementation, before processing the color of each channel of the second pixel based on the first saturation parameter corresponding to the first UI element, the electronic device may further process the color of each channel of the second pixel based on a first grayscale parameter corresponding to the first UI element. Processing the first UI element based on the first grayscale parameter may be grayscale brightening or darkening. After grayscale brightening or grayscale darkening is performed on the color of each channel, there is some loss on saturation of the color of each channel. Therefore, in this embodiment of this application, after performing grayscale processing on the first UI element, the electronic device may further perform saturation processing on the color of each channel, so that the color can be transparent or highly transparent.

In this implementation, an objective of grayscale processing is to enhance a comparison between the background image and the foreground UI element, so that the user can accurately identify the first UI element, thereby improving UI readability.

In a possible implementation, the first grayscale parameter is a first grayscale function. To improve readability of the first UI element, the following first filtering condition is set in this embodiment of this application:

(1) An absolute value of a first offset area corresponding to the first grayscale function is greater than a first area threshold, the first offset area is an offset area of a curve of the first grayscale function relative to a curve of a preset function, and the preset function is a directly proportional function and is an odd function.
(2) A first slope of the first grayscale function is greater than a first threshold.
(3) The first enhancement parameter specifically includes a positive enhancement coefficient and a negative enhancement coefficient of each channel, the positive enhancement coefficient is used when a color change amount of the channel is a positive value, and the negative enhancement coefficient is used when the color change amount of the channel is a negative value.

When the first offset area is a positive value, that is, when the electronic device performs grayscale brightening on the first UI element, in the first enhancement parameter, negative enhancement coefficients of a red channel and a green channel are greater than positive enhancement coefficients.

When the first offset area is a negative value, that is, when the electronic device performs grayscale darkening on the first UI element, in the first enhancement parameter, positive enhancement coefficients of a red channel and a green channel are greater than negative enhancement coefficients.

In this embodiment of this application, for the first UI element having no background panel, the electronic device may preset the first filtering condition adapted to the first UI element. The electronic device may select, based on the first filtering condition, the first grayscale function and the first enhancement parameter that are adapted to the first UI element. In this way, the electronic device processes the first UI element based on the first grayscale function and the first enhancement parameter, to be more adapted to the first UI element. In this way, fusion between the first UI element and the background image can be improved, and immersion of the user can be improved.

Scenario 2: A background panel exists under the second UI element.

In some embodiments, an interface of the electronic device further includes a background panel located at an upper layer of the image and a second UI element located at an upper layer of the background panel, a third pixel in the second UI element corresponds to each of a fourth pixel of the background panel and a fifth pixel in the image, and the information further includes a color of each channel of the fifth pixel.

In the method, because a background panel exists at a lower layer of the second UI element, the electronic device not only needs to process the second UI element, but also needs to process the background panel. The electronic device may process the color of each channel of the fifth pixel based on a second saturation parameter corresponding to the background panel, to obtain a third color change amount of each channel of the fifth pixel with respect to the processing. The electronic device enhances the third color change amount based on a second enhancement parameter corresponding to the background panel, to obtain a fourth color change amount of each channel of the fifth pixel; and determines a color of each channel of the fourth pixel based on the color of each channel of the fifth pixel and the fourth color change amount.

After processing the background panel, the electronic device may obtain the color of each channel of the fourth pixel in the image through the background panel. Further, the electronic device may process the second UI element. Specifically, the electronic device may process the color of each channel of the fourth pixel based on a third saturation parameter corresponding to the second UI element, to obtain a fifth color change amount of each channel of the fourth pixel with respect to the processing. The electronic device may enhance the fifth color change amount based on a third enhancement parameter corresponding to the second UI element, to obtain a sixth color change amount of each channel of the fourth pixel; and determine a color of each channel of the third pixel based on the color of each channel of the fourth pixel and the sixth color change amount. The electronic device may display the second UI element based on the color of each channel of the third pixel.

In a possible scenario, although a background panel exists at the lower layer of the second UI element, the second UI element does not completely shield the background panel. Therefore, there is a scenario in which no second UI element exists at the upper layer of the background panel. For example, the background panel further includes a sixth pixel, the second UI element does not shield the sixth pixel, the sixth pixel corresponds to a seventh pixel in the image, and the information further includes a color of each channel of the seventh pixel. In this scenario, the electronic device may process only the background panel.

Specifically, the electronic device may process the color of each channel of the seventh pixel based on the second saturation parameter, to obtain a seventh color change amount of each channel of the seventh pixel with respect to the processing. The electronic device may enhance the seventh color change amount based on the second enhancement parameter, to obtain an eighth color change amount of each channel of the seventh pixel; and determine a color of each channel of the sixth pixel based on the color of each channel of the seventh pixel and the eighth color change amount. Therefore, the electronic device may display the background panel based on the color of each channel of the sixth pixel.

Similar to the first UI element, before processing the color of each channel of the fifth pixel based on the second saturation parameter corresponding to the background panel, the electronic device may further process the color of each channel of the fifth pixel based on a second grayscale parameter corresponding to the background panel. Similarly, before processing the color of each channel of the fourth pixel based on the third saturation parameter corresponding to the second UI element, the electronic device may further process the color of each channel of the fourth pixel based on a third grayscale parameter corresponding to the second UI element.

In some embodiments, the second grayscale parameter is a second grayscale function, and the third grayscale parameter is a third grayscale function.

In a possible implementation, the second grayscale function and the third grayscale function are in an inverse adjustment relationship, or the second grayscale function and the third grayscale function are in a positive adjustment relationship. In some embodiments, a second offset area corresponding to the second grayscale function may indicate whether the second grayscale function is used to perform grayscale darkening or grayscale brightening on the background panel. Similarly, a third offset area corresponding to the third grayscale function may indicate whether the third grayscale function is used to perform grayscale darkening or grayscale brightening on the second UI element.

The second offset area is an offset area of a curve of the second grayscale function relative to a curve of a preset function, the preset function is a directly proportional function and is an odd function, and the third offset area is an offset area of a curve of the third grayscale function relative to the curve of the preset function.

When the second offset area is a positive value, it indicates that the second grayscale function is used to perform grayscale brightening on the background panel; or when the second offset area is a negative value, it indicates that the second grayscale function is used to perform grayscale darkening on the background panel. Similarly, when the third offset area is a positive value, it indicates that the third grayscale function is grayscale brightening on the background panel; or when the third offset area is a negative value, it indicates that the third grayscale function is used to perform grayscale darkening on the background panel.

When the second grayscale function and the third grayscale function are in the inverse adjustment relationship, the second grayscale function is used to perform grayscale brightening, and the third grayscale function is used to perform grayscale darkening; or the second grayscale function is used to perform grayscale darkening, and the third grayscale function is used to perform grayscale brightening. When the second grayscale function and the third grayscale function are in the positive adjustment relationship, the second grayscale function is used to perform grayscale brightening, and the third grayscale function is used to perform grayscale brightening; or the second grayscale function is used to perform grayscale darkening, and the third grayscale function is used to perform grayscale darkening.

Therefore, when the second grayscale function and the third grayscale function are in the inverse adjustment relationship, the second offset area corresponding to the second grayscale function is a positive value, and the third offset area corresponding to the third grayscale function is a negative value; or the second offset area is a negative value, and the third offset area is a positive value.

When the second grayscale function and the third grayscale function are in the positive adjustment relationship, the second offset area is a positive value, and the third offset area is a positive value; or the second offset area is a negative value, and the third offset area is a negative value.

In a possible implementation, to improve readability of the second UI element, the following second filtering condition is set in this embodiment of this application:

1. When the second grayscale function and the third grayscale function are in the inverse adjustment relationship, the second filtering condition may include the following:

(1) An absolute value of the second offset area is greater than a second area threshold, an absolute value of the third offset area is greater than a third area threshold, a third minimum offset is greater than a first offset threshold, and the third minimum offset is an absolute value of a minimum difference between a y value of the third grayscale function and a y value of the preset function when x remains the same.

In this implementation, an objective of such a setting is to improve a comparison between the image and the background panel and a comparison between the background panel and the second UI element, and improve UI readability.

(2) A first area threshold is greater than the third area threshold. In other words, compared with the second UI element having a background panel, the first UI element having no background panel corresponds to a larger first area threshold.

(3) The third minimum offset is greater than a second minimum offset, and the second minimum offset is an absolute value of a minimum difference between a y value of the second grayscale function and the y value of the preset function when x remains the same. In other words, a minimum offset corresponding to the second UI element in a foreground is greater than a minimum offset corresponding to a background, that is, a grayscale brightening or darkening degree of the foreground is higher than that of the background. An objective of such a setting is to improve a comparison between the second UI element in the foreground and the background, and improve readability of the second UI element.

(4) Same as a principle of (3), an absolute value of the third offset area is greater than an absolute value of the second offset area. In other words, an offset area corresponding to the second UI element in the foreground is greater than an offset area corresponding to the background.

2. When the second grayscale function and the third grayscale function are in the positive adjustment relationship, the second filtering condition may include the following:

(1) An absolute value of the third offset area is greater than a second area threshold, and a third minimum offset is greater than a second offset threshold.

(2) In some embodiments, to improve readability of the UI element, a ratio of a third slope of the third grayscale function to a second slope of the second grayscale function may be limited to be greater than a second threshold. In this way, when the second grayscale function and the third grayscale function are in the positive adjustment relationship, grayscale processing degrees of the electronic device for the background panel and the second UI element are different, so that readability of the UI element can be improved to some extent.

(3) A first area threshold is greater than the third area threshold.

It should be noted that in a scenario "the second grayscale function and the third grayscale function are in the inverse adjustment relationship" in "1" and a scenario "the second grayscale function and the third grayscale function are in the positive adjustment relationship" in "2", the third offset area and the third minimum offset are calculated within a range of a color value of each channel of the background panel.

In a possible implementation, for the scenario "the second grayscale function and the third grayscale function are in the inverse adjustment relationship" in "1" and the scenario "the second grayscale function and the third grayscale function are in the positive adjustment relationship" in "2", the second filtering condition may further include a limitation on enhancement parameters such as the second enhancement parameter and the third enhancement parameter:

The second enhancement parameter and the third enhancement parameter specifically include a positive enhancement coefficient and a negative enhancement coefficient of each channel, the positive enhancement coefficient is used when a color change amount of the channel is a positive value, and the negative enhancement coefficient is used when the color change amount of the channel is a negative value.

The second filtering condition may further include:

(1) when the second grayscale function and the third grayscale function are in the inverse adjustment relationship and the second offset area is a positive value, in the second enhancement parameter, negative enhancement coefficients of a red channel and a green channel are greater than positive enhancement coefficients, and in the third enhancement parameter, positive enhancement coefficients of the red channel and the green channel are greater than negative enhancement coefficients; or

(2) when the second grayscale function and the third grayscale function are in the inverse adjustment relationship and the second offset area is a negative value, in the second enhancement parameter and the third enhancement parameter, positive enhancement coefficients of a red channel and a green channel are greater than negative enhancement coefficients; or

(3) when the second grayscale function and the third grayscale function are in the positive adjustment relationship and the second offset area is a positive value, in the second enhancement parameter and the third enhancement parameter, negative enhancement coefficients of a red channel and a green channel are greater than positive enhancement coefficients; or

(4) when the second grayscale function and the third grayscale function are in the positive adjustment relationship and the second offset area is a negative value, in the second enhancement parameter and the third enhancement parameter, positive enhancement coefficients of a red channel and a green channel are greater than negative enhancement coefficients.

In this embodiment of this application, for the second UI element having a background panel, the electronic device may preset the second filtering condition adapted to the background panel and the second UI element. The electronic device may select, based on the second filtering condition, the second grayscale function and the second enhancement parameter that are adapted to the background panel, and the third grayscale function and the third enhancement parameter that are adapted to the second UI element. In this way, the electronic device processes the background panel based on the second grayscale function and the second enhancement parameter that are adapted to the background panel, and the electronic device processes the second UI element based on the third grayscale function and the third enhancement parameter of the second UI element, to be more adapted to the background panel and the second UI element. In this way, fusion between the second UI element and the background image can be improved, and immersion of the user can be improved.

Scenario 3: The second UI element includes a first-level sub-element and a second-level sub-element. The first-level sub-element and the second-level sub-element are located at a same layer.

In this scenario, that the electronic device processes the second UI element may be understood as that the electronic device processes different levels of sub-elements in the second UI element. Because the user has different requirements on UI readability of different levels of sub-elements, when processing the different levels of sub-elements, the electronic device may use different grayscale parameters and saturation parameters.

The first-level sub-element and the second-level sub-element correspond to different third saturation parameters, and the first-level sub-element and the second-level sub-element correspond to different third grayscale functions.

In a possible implementation, a level of the first-level sub-element is higher than a level of the second-level sub-element, a third saturation parameter corresponding to the first-level sub-element is greater than a third saturation parameter corresponding to the second-level sub-element, and a third slope of a third grayscale function corresponding to the first-level sub-element is greater than a third slope of a third grayscale function corresponding to the first-level sub-element.

In this implementation, a grayscale processing degree of the electronic device for a sub-element at a high level is large. In this way, brightness processing of the sub-element at the high level can be improved, to improve UI readability of the sub-element at the high level.

Scenario 4: The second UI element includes a third-level sub-element, a fourth-level sub-element, and a fifth-level sub-element that are stacked from top to bottom. The third-level sub-element, the fourth-level sub-element, and the fifth-level sub-element are located at different layers. For example, the third-level sub-element is located at an upper layer of the fourth-level sub-element, and the fourth-level sub-element is located at an upper layer of the fifth-level sub-element.

In this scenario, that the electronic device processes the second UI element may be understood as that the electronic device processes different levels of sub-elements in the second UI element. Because the user has different requirements on UI readability of different levels of sub-elements, when processing the different levels of sub-elements, the electronic device may use different grayscale parameters and saturation parameters.

In a possible implementation, the third-level sub-element, the fourth-level sub-element, and the fifth-level sub-element correspond to different third grayscale functions.

In a possible implementation, when x values are the same, a y value of a third grayscale function corresponding to the third-level sub-element, a y value of a third grayscale function corresponding to the fourth-level sub-element, and a y value of a third grayscale function corresponding to the fifth-level sub-element are in an arithmetic sequence.

In this implementation, when processing different levels of sub-elements, the electronic device may use different grayscale processing degrees. In addition, from bottom to top, the grayscale processing degrees may be in ascending order or in descending order. In this way, different levels of elements can present hierarchical progressive effect.

In a possible implementation, masking a UI element may improve readability of the UI element. Therefore, after processing the first UI element, the electronic device may perform masking processing on the first UI element. After performing masking processing on the first UI element, the electronic device may display the first UI element.

Similarly, in a possible implementation, before displaying the second UI element, the electronic device may further perform masking processing on the second UI element. Similarly, in a possible implementation, before displaying the background panel, the electronic device may further perform masking processing on the background panel.

According to a second aspect, an embodiment of this application provides an electronic device, including a processor and a memory. The memory is configured to store code instructions, and the processor is configured to run the code instructions, to perform the method according to any one of the first aspect or the possible implementations of the first aspect.

According to a third aspect, an embodiment of this application provides a computer-readable storage medium.

The computer-readable storage medium stores a computer program or instructions. When the computer program or the instructions are run on a computer, the computer is enabled to perform the method according to any one of the first aspect or the possible implementations of the first aspect.

According to a fourth aspect, an embodiment of this application provides a computer program product including a computer program. When the computer program runs on a computer, the computer is enabled to perform the method according to any one of the first aspect or the possible implementations of the first aspect.

According to a fifth aspect, this application provides a chip or a chip system. The chip or the chip system includes at least one processor and a communication interface. The communication interface and the at least one processor are interconnected through a line, and the at least one processor is configured to run a computer program or instructions, to perform the method according to any one of the first aspect or the possible implementations of the first aspect. The communication interface in the chip may be an input/output interface, a pin, a circuit, or the like.

In a possible implementation, the chip or the chip system in this application further includes at least one memory, and the at least one memory stores instructions. The memory may be a storage unit in the chip, for example, a register or a cache, or may be a storage unit (for example, a read-only memory or a random access memory) of the chip.

It should be understood that the technical solutions of the second aspect to the fifth aspect of this application correspond to the technical solutions of the first aspect of this application. Beneficial effects achieved by the aspects and corresponding feasible implementations are similar, and details are not described again.

**BRIEF DESCRIPTION OF DRAWINGS**

FIG. 1 is a diagram of a lock screen interface;

FIG. 2 is a diagram of a pull-down control center interface;

FIG. 3 is a schematic flowchart of an existing interface processing method;

FIG. 4 is a schematic flowchart of an embodiment of an interface processing method according to an embodiment of this application;

FIG. 5A is a diagram of an interface bearing a UI element;

FIG. 5B is a diagram of another interface bearing a UI element;

FIG. 6 is a schematic flowchart of another embodiment of an interface processing method according to an embodiment of this application;

FIG. 7 is a diagram used to describe an offset area and a minimum offset according to an embodiment of this application;

FIG. 8 is a diagram of a color of each channel and color superimposition;

FIG. 9A and FIG. 9B are a schematic flowchart of another embodiment of an interface processing method according to an embodiment of this application;

FIG. 10 is a schematic flowchart of another embodiment of an interface processing method according to an embodiment of this application;

FIG. 11 is a diagram used to describe a valid value range according to an embodiment of this application;

FIG. 12A-a to FIG. 12A-d are a diagram of interface effect in an interface processing process according to an embodiment of this application;

FIG. 12B is a diagram of an effect of a processed interface according to an embodiment of this application;

FIG. 13 is a diagram of an interface including different levels of sub-elements according to an embodiment of this application;

FIG. 14 is a diagram of a grayscale function applicable to a stacked element according to an embodiment of this application;

FIG. 15 is a diagram of a color change of each channel in an interface processing process according to an embodiment of this application;

FIG. 16a to FIG. 16d are a diagram of another effect of a processed interface according to an embodiment of this application; and

FIG. 17 is a diagram of a structure of an electronic device according to an embodiment of this application.

**DESCRIPTION OF EMBODIMENTS**

For ease of understanding, the following first describes related terms and concepts in embodiments of this application.

1. UI element: A user interface (user interface, UI) in embodiments of this application may include an image and a UI element located at an upper layer of the image. The UI element is located at the upper layer of the image, and the UI element may shield a part of the image.

In some embodiments, that the UI element is located at the upper layer of the image may be understood as that a layer at which the UI element is located is located at an upper layer of a layer at which the image is located. Before displaying the UI, an electronic device may perform layer composition processing on a layer included in the UI. For example, the electronic device may perform layer composition on the layer at which the UI element is located and the layer at which the image is located. The electronic device may place the layer at which the UI element is located at the upper layer of the layer at which the image is located. After performing layer composition processing, the electronic device may obtain the UI. The electronic device may send the UI for display, to display the UI.

In some embodiments, in other words, the UI may include a background image and a foreground UI element.

In some embodiments, the UI element may be understood as content that can be seen by a user in the UI in addition to the image.

For example, a home screen is used as an example. The image may be understood as a wallpaper, and the UI element may include but is not limited to a status bar, a folder, a card, an application icon, texts such as time and date, and an icon such as Weather. The status bar may include but is not limited to a text such as time, and icons such as signal strength and a remaining battery level. For example, a lock screen interface is used as an example. The image may be understood as a lock screen wallpaper, and the UI element may include but is not limited to texts such as time, date, and step count, and icons such as a flashlight and a camera. For example, a chat interface is used as an example. The image may be understood as a chat background image or a chat wallpaper, and the UI element may include but is not limited to a status bar, a peer name, chat information, a message input box, and the like.

It should be understood that an interface processing method provided in embodiments of this application is not limited to being applied to the home screen, the lock screen interface, or the chat interface, and may be further applied to another interface including "background image and foreground UI element".

2. A color channel is used to store color information. Each image has at least one color channel, and a default quantity of color channels in the image depends on a color mode. In other words, the color mode of the image determines the quantity of color channels of the image. For example, an image in a CMYK mode (cyan, magenta, yellow, black, CMYK) has four color channels by default, and the four color channels are cyan, magenta, yellow, and black. A red, green, blue (red, green, blue, RGB) image has three color channels by default, and the three color channels are red, green, and blue.

In the following embodiments, the three color channels in the RGB image are used as an example to describe an interface processing method provided in embodiments of this application. For another type of image and color channel, refer to the method in embodiments of this application.

3. Grayscale brightening can be understood as increasing image brightness. The brightness is related to a color value of each channel. A larger color value of each channel indicates higher brightness, and a smaller color value of each channel indicates lower brightness. In other words, grayscale brightening may also be understood as increasing the color value of each channel. For example, green is used as an example. A green value is 127. After grayscale brightening, the green value increases. For example, the green value changes to 195.

In some embodiments, RGB channels are used as an example. For the color value of each channel, an electronic device may perform processing based on a same function, to increase the color value of each channel. In some embodiments, the electronic device may further convert colors of the RGB channels into another color space, for example, a YUV space or a LUV color space. The YUV color space is used as an example. Y represents luminance. In the color space, the electronic device may process Y based on a function, to achieve grayscale brightening. The LUV color space is used as an example. L represents lightness. In the color space, the electronic device may process L based on a function, to achieve grayscale brightening.

4. Grayscale darkening can be understood as reducing image brightness. In other words, grayscale brightening may also be understood as reducing a color value of each channel. For example, green is used as an example. A green value is 127. After grayscale darkening, the green value decreases. For example, the green value changes to 70.

Based on descriptions in grayscale brightening, in some embodiments, RGB channels are used as an example. For the color value of each channel, an electronic device may perform processing based on a same function, to decrease the color value of each channel. In some embodiments, the electronic device may further convert colors of RGB channels into another color space, for example, a YUV space or a LUV color space. The YUV color space is used as an example. Y represents luminance. In the color space, the electronic device may process Y based on a function, to achieve grayscale darkening. The LUV color space is used as an example. L represents lightness. In the color space, the electronic device may process L based on a function, to achieve grayscale darkening.

5. Saturation means colorfulness of a color, and is also referred to as purity of the color.

6. Saturation processing: After grayscale brightening or grayscale darkening is performed on a color of each channel, there is some loss on saturation of the color of each channel. In this case, saturation processing is performed on the color of each channel, so that the color can be transparent or highly transparent.

7. A background panel is a graph located at an upper layer of an image and located at a lower layer of a UI element. The background panel is used to bear the UI element, so that a user can quickly identify the UI element.

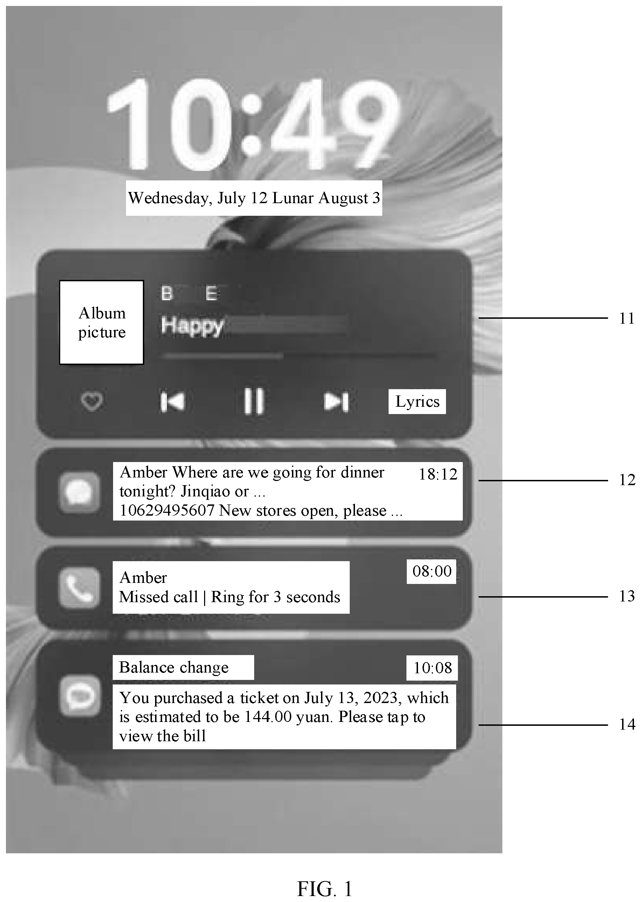

A lock screen interface is used as an example. A lock screen wallpaper, time, and a notification message may be displayed in the lock screen interface. The lock screen wallpaper may be considered as an image, and the time and the notification message may be considered as UI elements at the upper layer of the image. As shown in FIG. 1, time "10:49" is directly located at the upper layer of the image, and no other graph exists between a lower layer of the time and the upper layer of the image. In other words, no background panel exists at the lower layer of the time. The notification message is borne in a notification box, the notification box is located at a lower layer of the notification message and is located at the upper layer of the image. The notification box may be considered as a background panel of the notification message.

In some embodiments, the notification message may be displayed in a form of a card, a stacked card, or a capsule. In FIG. 1, that the notification message includes a music card 11, an SMS message card 12, an incoming call card 13, and a card 14 of another application is used as an example for description. Content in the card may be considered as a UI element, and a rounded rectangle used for the UI element may be considered as a background panel of the UI element. For example, the SMS message card 12 is used as an example. A text such as "Amber, where are we going for dinner tonight?" in the SMS message card may be considered as a UI element, and a rounded rectangle that bears the text may be considered as a background panel of the UI element.

8. Immersion may be represented as color fusion between a background image and a foreground UI element. For example, when color fusion between the background image and the foreground UI element is good, a user feels that the background image and the foreground UI element are fused together, and immersion is strong.

9. UI readability may be understood as difficulty in identifying and extracting a UI element in a UI by a user.

10. Electronic device:

The electronic device in embodiments of this application has a display, and the display may display a UI. The electronic device may be referred to as user equipment (user equipment, UE), a terminal (terminal), or the like. For example, the electronic device may be a mobile phone, a tablet computer (tablet), a personal digital assistant (personal digital assistant, PDA), a handheld device having a wireless communication function, a computing device, a vehicle-mounted device or a wearable device, a virtual reality (virtual reality, VR) terminal device, an augmented reality (augmented reality, AR) terminal device, a wireless terminal in industrial control (industrial control), or a wireless terminal in smart home (smart home). A form of the electronic device is not specifically limited in embodiments of this application.

In the following embodiments, that the electronic device is a mobile phone is used as an example for description.

A lock screen wallpaper has various colors. In FIG. 1, different grayscales are used to represent colors in the lock screen wallpaper. As shown in FIG. 1, current time is in uniform white, and time "10:49" shields a color of an image. Color fusion between the image and a UI element is poor, and a user has weak immersion. In addition, a background panel in a notification message may be non-transparent or semi-transparent. When the background panel is non-transparent, the background panel shields the color of the image, color fusion between the image and the UI element is poor, and a user has weak immersion. When the background panel is semi-transparent, the user may vaguely see an approximate color of a lower-layer image through the background panel. However, because different colors have different penetrability, if uniform semi-transparent processing is performed on the background panel, the user may vaguely see a part of colors when viewing the image through the background panel, the color is unclear, color fusion between the image and a foreground UI element is poor, and the user has weak immersion.

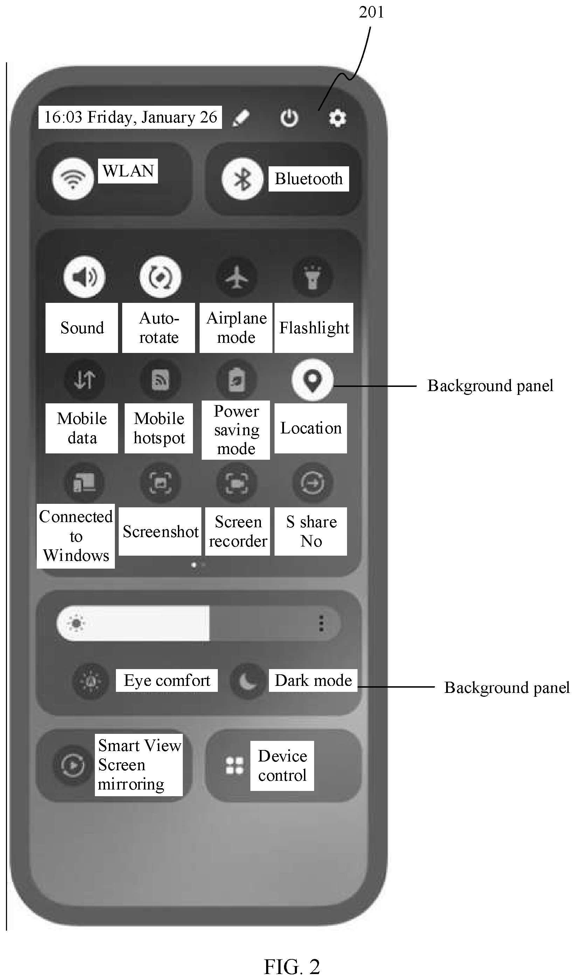

In some embodiments, to enhance an association between the foreground UI element and the image, an electronic device may perform processing such as blurring and semi-transparency on the image, and may set the foreground UI element to a preset color, for example, black. For example, a pull-down control center is used as an example. The user slides downward from an upper right location of a home screen, to trigger the electronic device to display a pull-down control center interface 201. The pull-down control center interface 201 may include a music card, a video card, different types of icons, a text, and the like. For example, as shown in FIG. 2, the pull-down menu interface 201 may include a wireless local area network (wireless local area network, WLAN) icon, a Bluetooth icon, a sound icon, and the like. It should be understood that a background panel exists under various icons, and the background panel is a circle or a rounded rectangle.

To enhance an association between the foreground UI element and the image, blurring and semi-transparency processing may be performed on the entire interface, and a line and a text in the icon are in a preset color, for example, black. Because the foreground UI element (for example, the line and the text in the icon) is in the preset color, the foreground UI element shields the color of the lower-layer image, and the user cannot see the color of the image at the UI element, color fusion between the image and the foreground UI element is poor. In addition, although the user may see the approximate color of the image through blurring, semi-transparency, and the like, because different colors have different penetrability, color fusion between the image and the foreground UI element is poor, and the user has weak immersion of browsing the image and the foreground UI element in the interface.

Based on this, embodiments of this application provide an interface processing method. Before displaying an interface, an electronic device may process a UI element in the interface and transparency of a background panel (if any) of the UI element, to improve color penetrability of a lower-layer image, so that a user can see a color of the lower-layer image to a maximum extent. In this way, color fusion between the image and a foreground UI element is improved. In addition, for a problem that different colors have different penetrability, in embodiments of this application, enhancement processing may be performed on a color change amount for colors of different channels. Enhancement processing degrees of change amounts of different colors are different. For example, a color with strong penetrability has large impact on immersive experience of the user. Therefore, an enhancement degree of a change amount of the color may be large. In this way, color fusion between the image and the foreground UI element can be improved, and immersion of browsing the image and the foreground UI element can be improved.

For why the foregoing problem exists in the conventional technology, the following describes an interface processing method in the conventional technology, to describe a reason for the problem in the conventional technology, so as to clearly distinguish between the interface processing method in the conventional technology and the interface processing method provided in embodiments of this application.

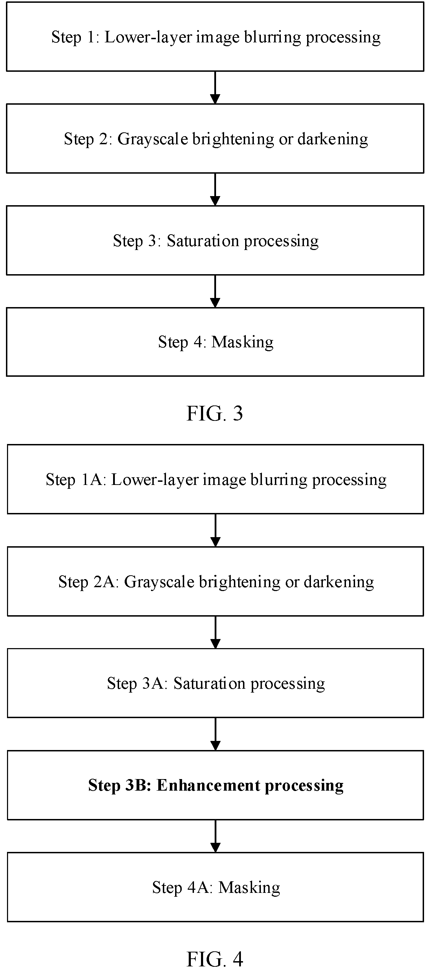

FIG. 3 is a schematic flowchart of an existing interface processing method. As shown in FIG. 3, the interface processing method may include the following steps.

Step 1: Lower-layer image blurring processing.

In some embodiments, when no background panel exists at a lower layer of a UI element, an interface may include an image and a UI element at an upper layer of the image.

In some embodiments, when a background panel exists at a lower layer of a UI element, an interface may include an image, a background panel at an upper layer of the image, and a UI element at an upper layer of the background panel.

Before displaying the interface, an electronic device may perform blurring processing on a lower-layer image of the UI element. In some embodiments, when no background panel exists at the lower layer of the UI element, the electronic device may perform blurring processing on the lower-layer image shielded by the UI element. In some embodiments, when a background panel exists at the lower layer of the UI element, the electronic device may perform blurring processing on a lower-layer image shielded by the background panel.

An objective of blurring processing is to display the UI element more clearly. It can be figured out that after blurring processing is performed on the lower-layer image, an upper-layer UI element has higher definition than the lower-layer image. In this way, a user can accurately identify the UI element.

A method for performing blurring processing on the lower-layer image is not limited in this embodiment of this application.

Step 2: Grayscale brightening or darkening.

For a concept of grayscale brightening or darkening, refer to descriptions in the foregoing embodiments. An objective of grayscale brightening or darkening is to enhance a comparison between a background image and a foreground UI element, so that the user can accurately identify the UI element, thereby improving UI readability.

In the conventional technology, a grayscale brightening or darkening function may be preset in the electronic device, and the electronic device may perform grayscale brightening or darkening processing on a color of each channel of the image based on the function.

Step 3: Saturation processing.

After grayscale brightening or grayscale darkening is performed on the color of each channel, there is some loss on saturation of the color of each channel. In this case, saturation processing is performed on the color of each channel, so that the color can be transparent or highly transparent.

In the conventional technology, a saturation parameter may be preset in the electronic device, and all colors of each channel are processed based on a uniform saturation parameter. A problem in the method is as follows: Because different colors have different penetrability, all colors are processed based on a uniform saturation parameter. All processed different colors still have different penetrability. Consequently, color fusion between the image and the foreground UI element is poor.

Step 4: Masking.

Masking may be understood as setting a shield layer, for example, the background panel, under the UI element.

In some embodiments, step 4 is an optional step. Step 4 does not need to be performed for a UI element having no background panel. In some embodiments, masking processing may alternatively be performed on the UI element having no background panel, to improve readability of the UI element. For a UI element having a background panel, for example, the UI element is an icon or a text, the electronic device may perform masking processing on the UI element, to display a mask layer at a lower layer of the UI element. The mask layer is a rounded rectangle or circle in FIG. 1 or FIG. 2.

FIG. 4 is a schematic flowchart of an embodiment of an interface processing method according to an embodiment of this application. It should be understood that FIG. 4 briefly describes a difference between the interface processing method in this application and an interface processing method in the conventional technology. For detailed content of the interface processing method provided in this embodiment of this application, refer to descriptions in the following embodiments.

As shown in FIG. 4, the interface processing method provided in this embodiment of this application may include the following steps.

Step 1A: Lower-layer image blurring processing.

Step 2A: Grayscale brightening or darkening.

Step 3A: Saturation processing.

In some embodiments, for step 1A to step 3A, refer to descriptions in step 1 to step 3.

Step 3B: Enhancement processing.

After an electronic device performs saturation processing on a color of each channel, because the color of each channel changes, a color change amount exists. Different from the conventional technology, in this embodiment of this application, for different colors of each channel, the electronic device may further perform enhancement processing to different degrees on the color change amount of each channel. To be specific, for different colors of each channel, the electronic device may increase or decrease change amounts of different colors to different degrees, to adjust saturation of different colors and improve color penetrability.

For example, the electronic device may increase a color change amount of a part of channels, and reduce a color change amount of a part of the channels, to further adjust saturation of the color of each channel. An objective of performing enhancement processing to different degrees on the color change amount of each channel in this embodiment of this application is as follows: Because colors of different channels have different penetrability, the electronic device may increase saturation to different degrees for different colors, to improve color penetrability. In this way, color fusion between an image and a foreground UI element can be improved, thereby improving immersion of browsing the image and the foreground UI element by a user.

Step 4A: Masking.

In some embodiments, step 4 is an optional step. For details, refer to descriptions in step 4.

The interface processing method provided in embodiments of this application is described below with reference to specific embodiments. The following several embodiments may be combined with each other, and a same or similar concept or process may not be described repeatedly in some embodiments.

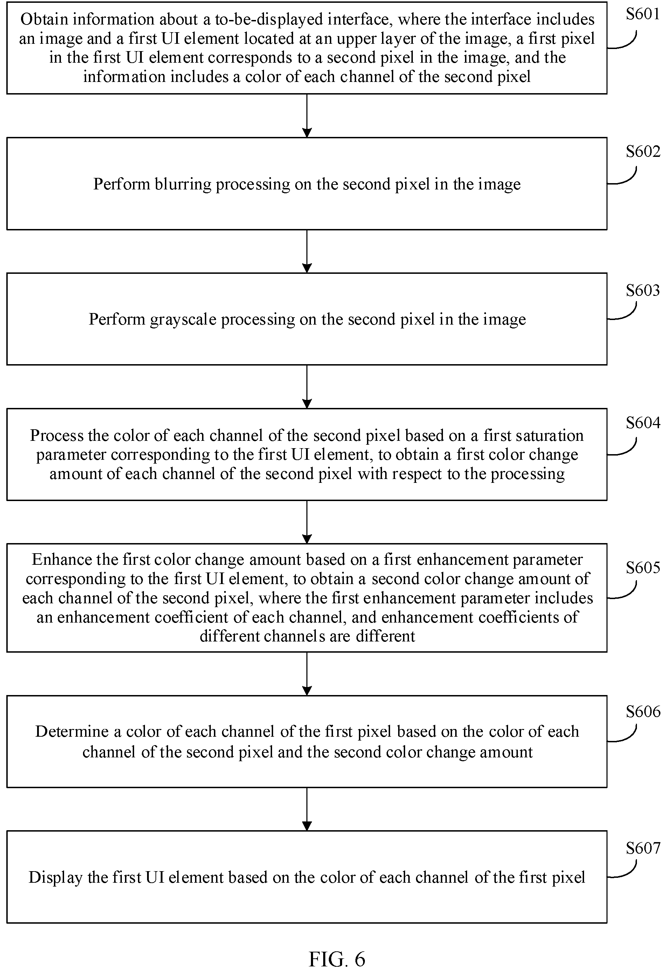

In an embodiment of this application, before displaying an interface, an electronic device may process a UI element and a background panel (if any) in the interface. After processing the interface, the electronic device may send the processed interface for display, to display the interface. The following embodiment describes a process in which the electronic device processes the UI element and the background panel (if any) in the interface. For details, refer to FIG. 6 and related descriptions of a first filtering condition.

There are various types of UI elements in the interface. For example, the UI element may include a UI element having a background panel and a UI element having no background panel. For the UI element having a background panel and the UI element having no background panel, the electronic device may perform processing in different interface processing methods. In addition, for example, the UI element may be a text, an icon, a capsule, a card, or a stacked card. For different types of UI elements, the electronic device may perform processing in different interface processing methods.

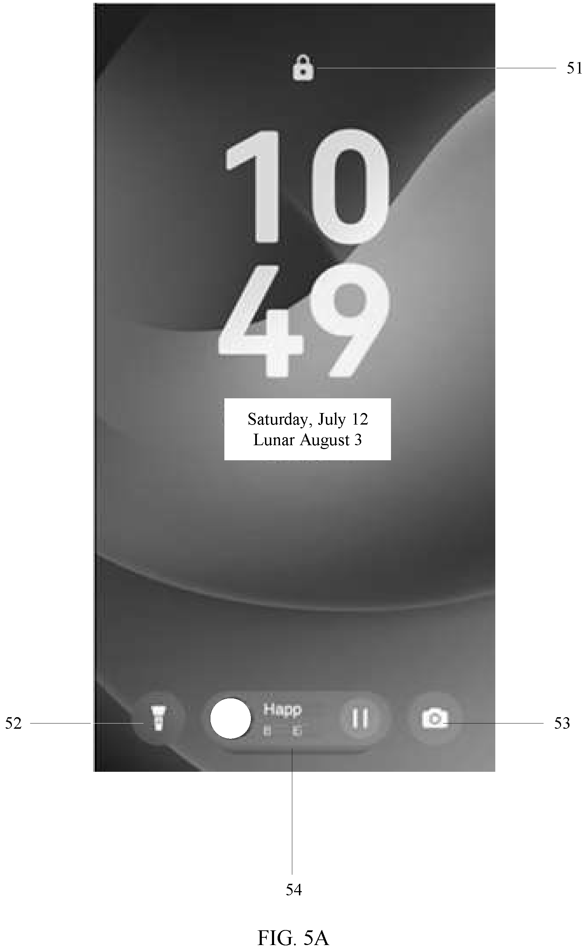

For example, a lock screen interface is used as an example. As shown in FIG. 5A, the lock screen interface may include texts such as time and date, a lock screen icon 51, a flashlight icon 52, a photographing icon 53, and a music capsule 54. The music capsule 54 is configured to bear information about audio currently played by the electronic device, and the information about the audio may include but is not limited to an audio name, a picture of an audio album, a singer name, and the like.

In summary, in FIG. 5A, the lock screen interface may include a plurality of types of UI elements such as a text, an icon, and a capsule. The text such as the time and the date, and the lock screen icon 51 have no background panel, and the flashlight icon 52, the photographing icon 53, and the music capsule 54 have a background panel.

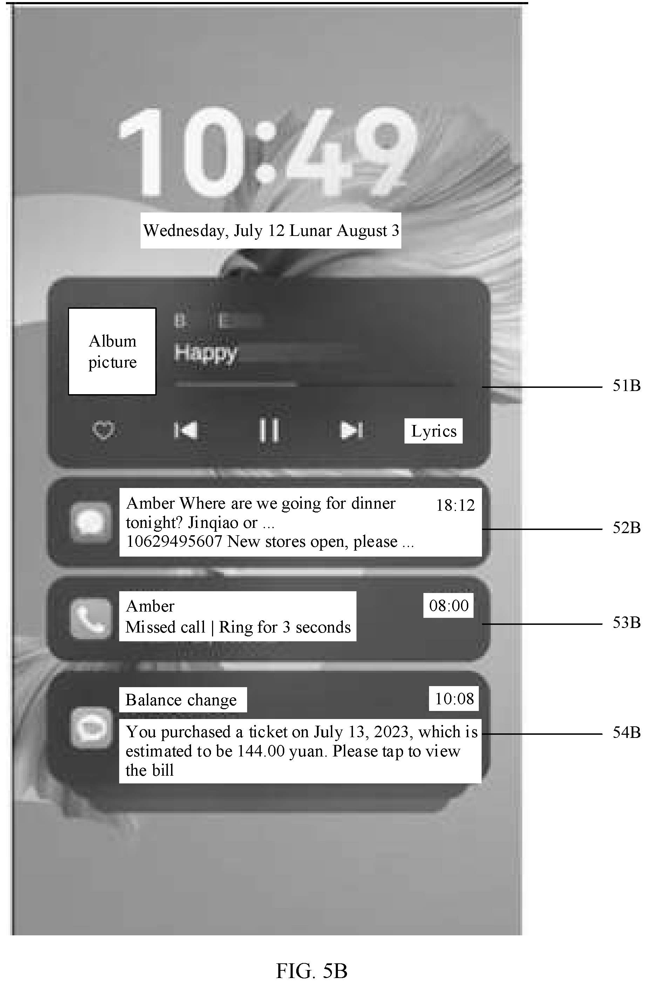

For example, the lock screen interface is used as an example. As shown in FIG. 5B, the lock screen interface may include texts such as time and date, a music card 51B, an SMS message card 52B, an incoming call card 53B, and a stacked card 54B of another application.

In summary, in FIG. 5B, the lock screen interface may include a plurality of types of UI elements such as a text and a card. The texts such as the time and the date have no background panel, and the music card 51B, the SMS message card 52B, the incoming call card 53B, and the stacked card 54B of the another application have a background panel.

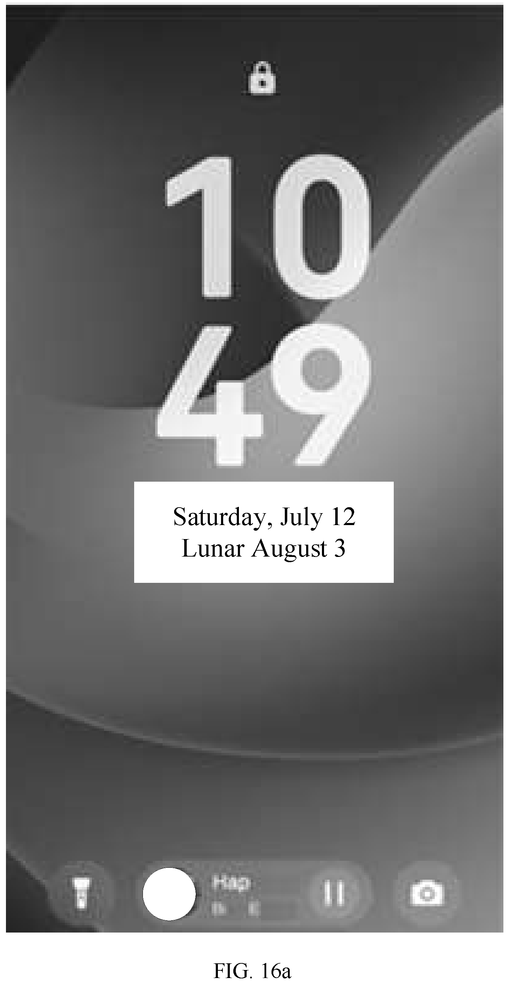

It should be understood that in FIG. 5A and FIG. 5B in this embodiment of this application and in FIG. 16a to FIG. 16d in the following embodiments, a circle and a rectangle are used to represent an album picture, an icon of an application, and the like.

In the following embodiments, a method in which an electronic device processes a UI element having no background panel is described, and then a method in which an electronic device processes a UI element having a background panel is described. Subsequently, methods for processing different types of UI elements by an electronic device are introduced.

Scenario 1: A UI element has no background panel.

FIG. 6 is a schematic flowchart of another embodiment of an interface processing method according to an embodiment of this application. As shown in FIG. 6, the interface processing method provided in this embodiment of this application may include the following steps.

S601: Obtain information about a to-be-displayed interface, where the interface includes an image and a first UI element located at an upper layer of the image, a first pixel in the first UI element corresponds to a second pixel in the image, and the information includes a color of each channel of the second pixel.

Before displaying the interface, an electronic device may obtain the information about the to-be-displayed interface. In this example, that the UI element has no background panel is used as an example. Therefore, the interface may include the image and the first UI element located at the upper layer of the image. In this embodiment of this application, that the first UI element is located at the upper layer of the image may be understood as that a layer at which the first UI element is located is located at an upper layer of a layer at which the image is located.

It should be understood that before displaying the interface, the electronic device may perform layer composition processing on layers that constitute the interface. The electronic device may perform, in an up-down sequence of the layers, layer composition on the layer at which the first UI element is located and the layer at which the image is located, and place the layer at which the first UI element is located at the upper layer of the layer at which the image is located, to obtain the interface. The electronic device may send the interface for display, to display the interface.

The layer at which the first UI element is located may include at least one UI element. In some embodiments, all UI elements that have no background panel in the interface may be considered as the first UI element.

The first UI element may occupy a plurality of pixels. For example, the first UI element may occupy "a plurality of pixels at the layer at which the first UI element is located". In this embodiment of this application, that the first UI element occupies the first pixel is used as an example to describe the interface processing method provided in this embodiment of this application.

In this embodiment of this application, the first pixel corresponds to the second pixel in the image. That the first pixel corresponds to the second pixel in the image may be understood as that the first pixel at the layer at which the first UI element is located corresponds to the second pixel at the layer at which the image is located. It may also be understood that the first pixel and the second pixel are located at a same location in the interface, but the first pixel and the second pixel are located at different layers of the interface. The first pixel is located at an upper layer at which the first UI element is located, and the second pixel is located at a lower layer at which the image is located.

In some embodiments, the first pixel may include at least one pixel. For example, each pixel in the first pixel may be considered as the first pixel. Correspondingly, the second pixel may include at least one pixel. In this embodiment of this application, the first pixel and the second pixel are used as an example to describe a method in which an electronic device processes a UI element having no background panel.

In some embodiments, the information about the interface includes a color of each channel of the second pixel. For example, a channel of the interface includes RGB channels. The information about the interface may include a red value of an R channel, a green value of a G channel, and a blue value of a B channel in the second pixel. In some embodiments, the red value, the green value, and the blue value may be in a range of 0 to 255.

In some embodiments, the information about the interface may include a color of each channel of each pixel in the image and a color of each channel of each pixel in the UI element (including the first UI element) at the upper layer of the image. In this example, the information about the interface may include the color of each channel of the second pixel in the image and a color of each channel of the first pixel in the first UI element.

S602: Perform blurring processing on the second pixel in the image.

In some embodiments, S602 is an optional step. For example, when the second pixel in the lower-layer image has been in a blurred state, the electronic device does not need to perform S602. In this example, when the image has been in the blurred state, the information about the interface may include a blurring-related parameter of the image, and the electronic device may check whether the information about the interface includes the blurring-related parameter of the image, to determine whether blurring processing is performed on the image.

For S602, refer to the descriptions in step 1.

S603: Perform grayscale processing on the second pixel in the image.

In some embodiments, S603 is an optional step. For S603, refer to the descriptions in step 2.

Grayscale processing may include grayscale brightening or darkening. In some embodiments, whether the electronic device performs grayscale brightening or grayscale darkening on the image may be preset, or the electronic device may choose, based on a type of the UI element, to perform grayscale brightening or grayscale darkening on the image. In some embodiments, for S603, refer to the following related descriptions of a first filtering condition, a second filtering condition, and a third filtering condition.

S604: Process the color of each channel of the second pixel based on a first saturation parameter corresponding to the first UI element, to obtain a first color change amount of each channel of the second pixel with respect to the processing.

In some embodiments, for different types of UI elements, different saturation parameters may be preset in the electronic device. The saturation parameter is used to process the color of each channel of the second pixel corresponding to the UI element. In this embodiment of this application, the electronic device may select the first saturation parameter corresponding to the first UI element based on a type of the first UI element, and process the color of each channel of the second pixel, to obtain a first color change amount of each channel of the second pixel with respect to the processing.

That the electronic device processes the color of each channel of the second pixel based on the first saturation parameter may be understood as that the electronic device increases or decreases saturation of the color of each channel. Increasing or decreasing the saturation affects the color of each channel of the second pixel, and consequently causes a change in a color value of each channel of the second pixel, that is, a color change amount. In this embodiment of this application, the color change amount of each channel of the second pixel with respect to the processing based on the first saturation parameter may be referred to as a first color change amount.

In some embodiments, a plurality of saturation parameters and filtering conditions corresponding to different types of UI elements may be preset in the electronic device. The filtering condition is used to select a saturation parameter corresponding to the UI element from the plurality of saturation parameters. It should be understood that the filtering condition is a preset condition adapted to the UI element. Therefore, a saturation parameter selected based on the filtering condition is adapted to the UI element, to improve accuracy of processing saturation of the UI element.

In this embodiment, the electronic device may determine a filtering condition corresponding to the first UI element based on the type of the first UI element. The electronic device may select a saturation parameter corresponding to the first UI element from the plurality of saturation parameters based on the filtering condition corresponding to the first UI element. The electronic device may process the color of each channel of the second pixel based on the saturation parameter corresponding to the first UI element, to obtain a first color change amount of each channel of the second pixel with respect to the processing.

For the filtering conditions corresponding to the different types of UI elements, refer to related descriptions of the first filtering condition, the second filtering condition, and the third filtering condition.

In this embodiment of this application, an objective of performing processing by the electronic device based on different saturation parameters for different types of UI elements is as follows: Different types of UI elements and different importance degrees of the UI elements in the interface bring different immersive experience to a user. The electronic device processes the color of each channel of the second element corresponding to the UI element based on the saturation parameter adapted to the UI element, to be more adapted to the type of the UI element. In this way, an important UI element can be highlighted, and immersive experience of the user is improved.

S605: Enhance the first color change amount based on a first enhancement parameter corresponding to the first UI element, to obtain a second color change amount of each channel of the second pixel, where the first enhancement parameter includes an enhancement coefficient of each channel, and enhancement coefficients of different channels are different.

For the image at the lower layer of the first UI element, after the electronic device performing processing based on the uniform first saturation parameter, the color of each channel of the second pixel in the image changes, that is, there is the first color change amount. Because different colors have different penetrability, in this embodiment of this application, enhancement processing may be performed on first color change amounts of different colors, to adjust saturation of the different colors, and adjust penetrability of the different colors.

It should be understood that light with different colors has different wavelengths. A longer wavelength indicates stronger color penetrability. In different colors, red, yellow, and green have a long wavelength, and correspondingly, three colors of red, yellow, and green also have strong penetrability. In addition, yellow can be regarded as a superimposed color of red and green, and yellow increases a psychological tension of the user. Therefore, if penetrability of yellow is further enhanced, the user feels uneasy.

In some embodiments, because the red and green colors have large impact on immersive experience of the user, in different scenarios, the electronic device may enhance first color change amounts of colors of the red and green channels to a large extent, and enhance another color to a small extent or does not enhance another color, to enhance color penetrability of the red and green channels. In this way, the user can see a color of the image more clearly, thereby improving fusion between a foreground UI element and a background, and enhancing immersive experience of the user.

In some embodiments, the enhancement parameter may be preset in the electronic device, and the enhancement parameter may include an enhancement coefficient of each channel. The enhancement coefficient is used to enhance the first color change amount of the corresponding channel. In this embodiment of this application, enhancement coefficients of different channels are different. To be specific, colors of different channels correspond to different enhancement coefficients. To be specific, the electronic device enhances first color change amount of the different channels to different degrees.

In this embodiment, the electronic device may perform enhancement processing on the first color change amount of each channel based on the enhancement coefficient of each channel, to obtain the second color change amount of each channel of the second pixel.

S606: Determine a color of each channel of the first pixel based on the color of each channel of the second pixel and the second color change amount.

In some embodiments, the second color change amount of each channel of the second pixel may be a positive value or a negative value. For example, when the electronic device increases the saturation of the color of each channel, the second color change amount of each channel of the second pixel may be a positive value; or when the electronic device decreases the saturation of the color of each channel, the second color change amount of each channel of the second pixel may be a negative value. The electronic device may obtain an adjusted color of each channel of the second pixel by adding the second color change amount of each channel of the second pixel based on the color of each channel of the second pixel. The adjusted color of each channel of the second pixel may be considered as the color of each channel of the to-be-displayed first pixel.

S607: Display the first UI element based on the color of each channel of the first pixel.

After determining the color of each channel of the first pixel, the electronic device may display the first UI element based on the color of each channel of the first pixel. For example, the electronic device may display the first pixel in the first UI element based on the color of each channel of the first pixel.

In this embodiment of this application, for the first UI element having no background panel, after performing saturation processing on the color of each channel, for different colors of each channel, the electronic device may further perform enhancement processing to different degrees on the color change amount of each channel, to improve color penetrability. In this way, color fusion between an image and a foreground UI element can be improved, thereby improving immersion of browsing the image and the foreground UI element by a user.

To facilitate understanding of a processing method in embodiments of this application, the following first describes related terms in embodiments of this application.

(1) Grayscale parameter

The grayscale parameter is used to process a color of each channel, for example, used to perform grayscale brightening or darkening on a color of each channel of a pixel.

In some embodiments, the grayscale parameter may exist in a form of a grayscale function. For example, a curve of the grayscale function may be represented as a straight line or a curve. For example, a plurality of grayscale functions may be preset in an electronic device, and different grayscale functions may be applied to different types of UI elements and background panels.

(2) Offset area

The offset area is an offset area of a curve of a grayscale function relative to a curve of a preset function. The preset function is a directly proportional function and is an odd function. For example, the preset function is "y=x".

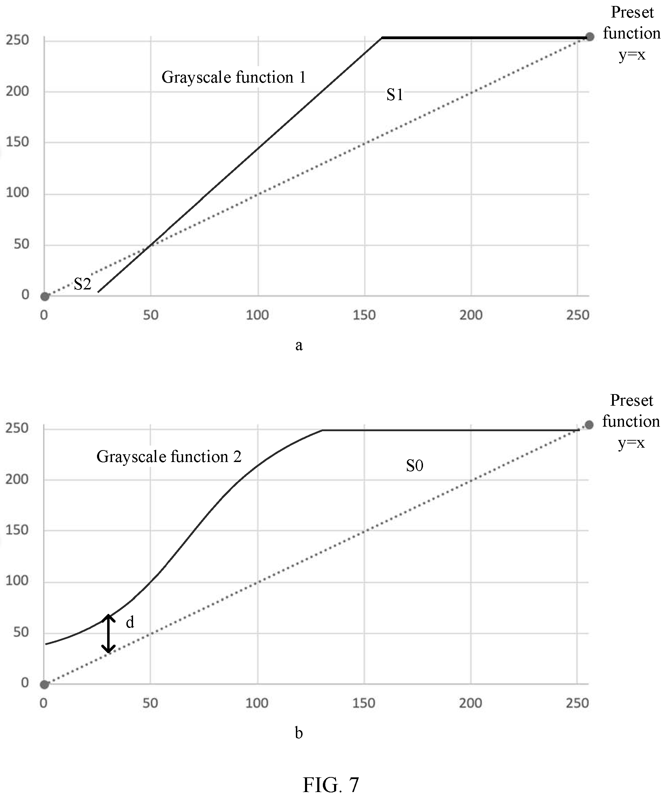

It should be understood that, in FIG. 7, a dashed line represents the curve of the preset function, and a solid line represents the curve of the grayscale function. A horizontal coordinate indicates a color value of each channel before grayscale processing, and a vertical coordinate indicates a color value of each channel after grayscale processing. The color value of each of the horizontal coordinate and the vertical coordinate ranges from 0 to 255.

For example, a in FIG. 7 shows a curve of a grayscale function 1 and a curve of a preset function. The curve of the grayscale function 1 is represented as a straight line. As shown in a in FIG. 7, there is an intersection point a between the curve of the grayscale function 1 and the curve of the preset function, and a horizontal coordinate of a is x1. When x<x1, a y value of the preset function is greater than a y value of the grayscale function 1. In other words, the preset function is above the grayscale function 1. When x>x1, the y value of the preset function is less than the y value of the grayscale function 1. In other words, the grayscale function 1 is above the preset function. An electronic device may calculate an area S1 formed between the curve of the grayscale function 1 and the curve of the preset function when "the grayscale function 1 is above the preset function" and an area S2 formed between the curve of the grayscale function 1 and the curve of the preset function when "the preset function is above the grayscale function 1". The electronic device may subtract the area S2 when "the preset function is above the grayscale function 1" from the area S1 when "the grayscale function 1 is above the preset function", to obtain an offset area S. For example, Offset area S=S1-S2.

It may be understood that, when there are a plurality of intersection points between the curve of the grayscale function and the curve of the preset function, the electronic device may calculate a sum, for example, S1', of areas formed between curves of grayscale functions and the curve of the preset function when "all the grayscale functions are above the preset function", and calculate a sum, for example, S2', of areas formed between curves of grayscale functions and the curve of the preset function when "the preset function is above all the grayscale function". The electronic device subtracts the area when "the preset function is above the grayscale function 1" from the area when "the grayscale function 1 is above the preset function", to obtain an offset area.

For example, b in FIG. 7 shows a curve of a grayscale function 2 and a curve of a preset function. The curve of the grayscale function 2 is represented as a curve. As shown in b in FIG. 7, there is no intersection point between the curve of the grayscale function 2 and the curve of the preset function. The grayscale function 2 is located above the preset function. In this example, the electronic device may calculate an area S0 formed between the curve of the grayscale function 2 and the curve of the preset function in a range of x from 0 to 255. S0 may be used as an offset area S. For example, S=S0.

In embodiments of this application, each grayscale function preset in the electronic device has a corresponding offset area.

In some embodiments, when the offset area is a positive value, the grayscale function is used to perform grayscale brightening. In other words, the grayscale function is used to increase the color value of each channel. When the offset area is a negative value, the grayscale function is used to perform grayscale darkening. In other words, the grayscale function is used to reduce the color value of each channel.

(3) Minimum offset

The minimum offset is a minimum difference between a y value of a grayscale function and a y value of a preset function when x remains the same in a curve of the grayscale function and a curve of the preset function. For example, "the y value of the grayscale function is subtracted from the y value of the preset function to calculate the difference". Because the difference between the y value of the grayscale function and the y value of the preset function may be a positive value or a negative value, the minimum offset in embodiments of this application is a minimum "difference absolute value", namely, an absolute value of a minimum difference between the y value of the grayscale function and the y value of the preset function.

For example, as shown in a in FIG. 7, because there is an intersection point a between a curve of a grayscale function 1 and a curve of the preset function, at the intersection point a, a difference absolute value between the y value of the grayscale function and the y value of the preset function is the minimum, and is 0. In other words, a minimum offset between the grayscale function 1 and the preset function is 0.

For example, as shown in b in FIG. 7, because there is no intersection point between a curve of a grayscale function 2 and the curve of the preset function, an electronic device may calculate a minimum difference, namely, a minimum offset, between the y value of the grayscale function and the y value of the preset function. As shown in b in FIG. 7, for example, the minimum offset between the grayscale function and the preset function is d.

In embodiments of this application, each grayscale function preset in the electronic device has a corresponding minimum offset.

(4) Saturation parameter (n)

The saturation parameter is used to process a color of each channel and adjust saturation of the color of each channel.

An R channel is used as an example. In some embodiments, an electronic device may process a color of the R channel based on Formula 1:

$$R(n)=R\times(a\times(1-n)+n)+G\times(b\times(1-n))+B\times(c\times(1-n)) \quad \text{Formula 1}$$

Herein, n represents the saturation parameter (for example, a first saturation parameter), and R, G, and B respectively represent a color value of a red channel, a color value of a green channel, and a color value of a blue channel. a, b, and c are a coefficient of the red channel, a coefficient of the green channel, and a coefficient of the blue channel. For example, a may be 0.2412016, b may be 0.6922296, and c may be 0.0665688.

R(n) is a color value that is of the red channel and that is obtained through processing based on the saturation parameter.

After obtaining R(n), the electronic device may calculate a first color change amount of the red channel based on R(n) and R. The first color change amount $\Delta R$ of the red channel may be shown in Formula 2:

$$\Delta R = R(n) - R \qquad \text{Formula 2}$$

Similarly, for the green channel, the electronic device may process a color of a G channel based on Formula 3:

$$G(n) = G \times (b \times (1-n) + n) + R \times (a \times (1-n)) + B \times (c \times (1-n)) \qquad \text{Formula 3}$$

G(n) is a color value that is of the green channel and that is obtained through processing based on the saturation parameter.

After obtaining G(n), the electronic device may calculate a first color change amount of the green channel based on G(n) and G. The first color change amount $\Delta G$ of the green channel may be shown in Formula 4:

$$\Delta G = G(n) - G \qquad \text{Formula 4}$$

Similarly, for the blue channel, the electronic device may process a color of a B channel based on Formula 5:

$$B(n) = B \times (c \times (1-n) + n) + R \times (a \times (1-n)) + G \times (b \times (1-n)) \qquad \text{Formula 5}$$

B(n) is a color value that is of the blue channel and that is obtained through processing based on the saturation parameter.

After obtaining B(n), the electronic device may calculate a first color change amount of the blue channel based on B(n) and B. The first color change amount $\Delta B$ of the blue channel is shown in Formula 6:

$$\Delta B = B(n) - B \qquad \text{Formula 6}$$

It may be understood that formulas used to calculate a color that is of each channel and that is obtained through grayscale processing in Formula 1, Formula 3, and Formula 5 are examples for description. In embodiments of this application, grayscale brightening or darkening may be performed on the color of each channel of the pixel in a form of another formula or another matrix.

(5) Enhancement coefficient (P1, P2, P3, P4, P5, and P6)

As described above, the enhancement coefficient may include an enhancement coefficient of each channel. Enhancement coefficients of different channels are different.

In some embodiments, the enhancement coefficient may specifically include a positive enhancement coefficient and a negative enhancement coefficient of each channel. The positive enhancement coefficient is used when a color change amount of the channel is a positive value, and the negative enhancement coefficient is used when the color change amount of the channel is a negative value.

For example, after saturation processing, a color value of the channel increases, that is, a first color change amount of the channel is a positive value. Correspondingly, an electronic device may perform enhancement processing on the first color change amount based on the positive enhancement coefficient of the channel, to obtain a second color change amount. The second color change amount is also a positive value.

For example, after saturation processing, a color value of the channel decreases, that is, a first color change amount of the channel is a negative value. Correspondingly, an electronic device may perform enhancement processing on the first color change amount based on the negative enhancement coefficient of the channel, to obtain a second color change amount. The second color change amount is also a negative value.

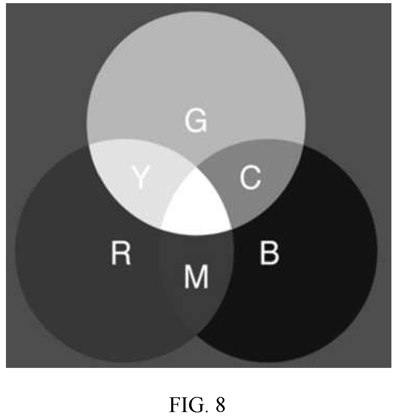

In some embodiments, as shown in FIG. 8, three colors, namely, red (R), green (G), and blue (B), of RGB channels are used as an example. Red is superimposed on green to obtain yellow (Y), red is superimposed on blue to obtain magenta (M), and green is superimposed on blue to obtain cyan (C). For example, a positive enhancement coefficient of the R channel is P1, and a negative enhancement coefficient is P2; a positive enhancement coefficient of the G channel is P3, and a negative enhancement coefficient is P4; and a positive enhancement coefficient of the B channel is P4, and a negative enhancement coefficient is P5.

P1 affects red, P3 affects green, and P5 affects blue. P2 affects a second tendency color cyan of red, P4 affects a second tendency color magenta of green, and P6 affects a second tendency color yellow of blue. A second tendency color of a color may be considered as an inverse color of the color, that is, a color obtained without superimposition with the color. For example, red is used as an example. Red is superimposed on green to obtain yellow, and red is superimposed on blue to obtain magenta. In this case, cyan (green is superimposed on blue) is unrelated to red, and cyan may be considered as the second tendency color of red or an inverse color of red.

According to descriptions in the foregoing embodiments, because colors of a red channel and a green channel greatly affect immersion of a user, the electronic device may set P1, P2, P3, and P4 that are different, to adjust the colors of the red channel and the green channel and second tendency colors of the colors of the red channel and the green channel. For example, when penetrability of red and green needs to be improved, but penetrability requirements for cyan and magenta is not high, the electronic device may set P1 and P3 to large values, and compared with P1 and P3, may set P2 and P4 to small values. For example, when penetrability of red and green is strong, and penetrability of cyan and magenta needs to be improved, the electronic device may set P2 and P4 to large values, and compared with P2 and P4, may set P1 and P3 to small values.

The following describes in detail, based on term descriptions (1) to (5), a process in which an electronic device processes a first UI element having no background panel.

In some embodiments, for texts such as time and date shown in FIG. 5A and texts such as time and date shown in FIG. 5B, such a type of UI element has no background panel, and the electronic device may process the type of UI element in a method shown in FIG. 6.

To improve image transparency, that is, enable a user to feel that an image color is transparent from the first UI element, and further improve immersion of the user, in some embodiments, for the first UI element having no background panel, grayscale processing in S603, saturation processing in S604, and the enhancement processing parameter in S605 are all limited by some filtering conditions. Due to a limitation of the filtering conditions, processing effect can be enhanced, and immersion of the user can be enhanced.

In some embodiments, in S603, the electronic device may process a color of each channel of a second pixel based on a first grayscale parameter corresponding to the first UI element.

In some embodiments, the grayscale parameter may include a color value for darkening or brightening. Alternatively, in some embodiments, the grayscale parameter may be a grayscale function. The following provides descriptions by using an example in which the grayscale parameter is a grayscale function. For example, the first grayscale parameter may be a first grayscale function.

It should be understood that a plurality of grayscale functions may be preset in the electronic device. Before the electronic device processes the color of each channel of the second pixel, the electronic device may select, from the plurality of grayscale functions, a first grayscale function adapted to the first UI element. In some embodiments, a first filtering condition may be preset in the electronic device, and the first filtering condition is adapted to a UI element (for example, the first UI element) that has no background panel. In this embodiment, the electronic device may select, from the plurality of grayscale functions based on the first filtering condition, the first grayscale function adapted to the first UI element.

The first grayscale function is used as an example. In some embodiments, the first filtering condition is shown as follows:

(1) An absolute value of a first offset area corresponding to the first grayscale function is greater than a first area threshold. For example, the first area threshold may be 55/255. An objective of such a setting is to ensure effect of grayscale brightening or darkening, and improve readability of the first UI element.

(2) A first slope of the first grayscale function is greater than a first threshold. For example, the first threshold may be 0.4.

In some embodiments, when the first grayscale function is not a straight line, the first slope may be a minimum slope or an average slope of the first grayscale function. Alternatively, in some embodiments, when the first grayscale function is not a straight line, the first slope may be a slope of a connection line between start points of the first grayscale function.

An objective of such a setting is to improve transparency of the first UI element, that is, enhance color penetrability of an image at a second pixel. In this way, the user can see a color of the second pixel through the first UI element.

The following continues to describe the first filtering condition. The first filtering condition is further used to limit a setting of a first enhancement parameter.

In some embodiments, when the first offset area is a positive value, that is, the electronic device performs grayscale brightening processing on the image, the color value of each channel of the second pixel increases, brightness increases, and penetrability of the color of each channel increases. In this case, red and green have strong penetrability. In this scenario, in the first enhancement parameter, the electronic device may set negative enhancement coefficients of a red channel and a green channel to large values, and set positive enhancement coefficients to small values. The negative enhancement coefficients of the red channel and the green channel are greater than positive enhancement coefficients.

An objective of such a setting is as follows: The electronic device performs grayscale brightening processing on the image, so that penetrability of red and green can be increased. In this case, penetrability of red and green is strong. Therefore, penetrability of another color can be enhanced, to improve penetrability of an overall color at the second pixel.

Therefore, when performing enhancement processing on the color of each channel, the electronic device may set P1 and P3 that affect red and green to small values, and set P2 and P4 that affect cyan and magenta to large values. In other words, the negative enhancement coefficients of the red channel and the green channel are greater than the positive enhancement coefficients. In other words, P2 and P4 are large values, and P1 and P3 are small values. In some embodiments, for example, P1 is less than P2 and less than P4, and P3 is less than P2 and less than P4.

In some embodiments, when the first offset area is a negative value, that is, the electronic device performs grayscale darkening processing on the image, the color value of each channel of the second pixel decreases, brightness decreases, and penetrability of the color of each channel decreases. In this case, red and green are main colors that affect immersion of the user. Because penetrability of red and green is reduced, to improve immersion of the user, penetrability of red and green needs to be enhanced first. Therefore, in this scenario, in the first enhancement parameter, the electronic device may set positive enhancement coefficients of the red channel and the green channel to large values, and set negative enhancement coefficients to small values. The positive enhancement coefficients of the red channel and the green channel are greater than the negative enhancement coefficients.

An objective of such a setting is as follows: The electronic device performs grayscale darkening processing on the image, so that penetrability of red and green can be reduced. Red and green are main colors that affect immersion of the user. In this case, because penetrability of red and green is reduced, to enhance immersion of the user as much as possible, when performing enhancement processing on the color of each channel, the electronic device may set P1 and P3 that affect red and green to large values, penetrability of other colors such as cyan and magenta is reduced, and immersive experience of the user is small. Therefore, the electronic device may set P2 and P4 that affect cyan and magenta to smaller values. In other words, the positive enhancement coefficients of the red channel and the green channel are greater than the negative enhancement coefficient. In other words, P1 and P3 are larger values, and P2 and P4 are smaller values. In some embodiments, for example, P2 is less than P1 and less than P3, and P4 is less than P1 and less than P3.

In conclusion, in this embodiment of this application, for the first UI element having no background panel, the electronic device may preset the first filtering condition adapted to the first UI element. The electronic device may select, based on the first filtering condition, the first grayscale function and the first enhancement parameter that are adapted to the first UI element. In this way, the electronic device processes the first UI element based on the first grayscale function and the first enhancement parameter, to be more adapted to the first UI element. In this way, fusion between the first UI element and the background image can be improved, and immersion of the user can be improved.

Scenario 2: A UI element has a background panel.

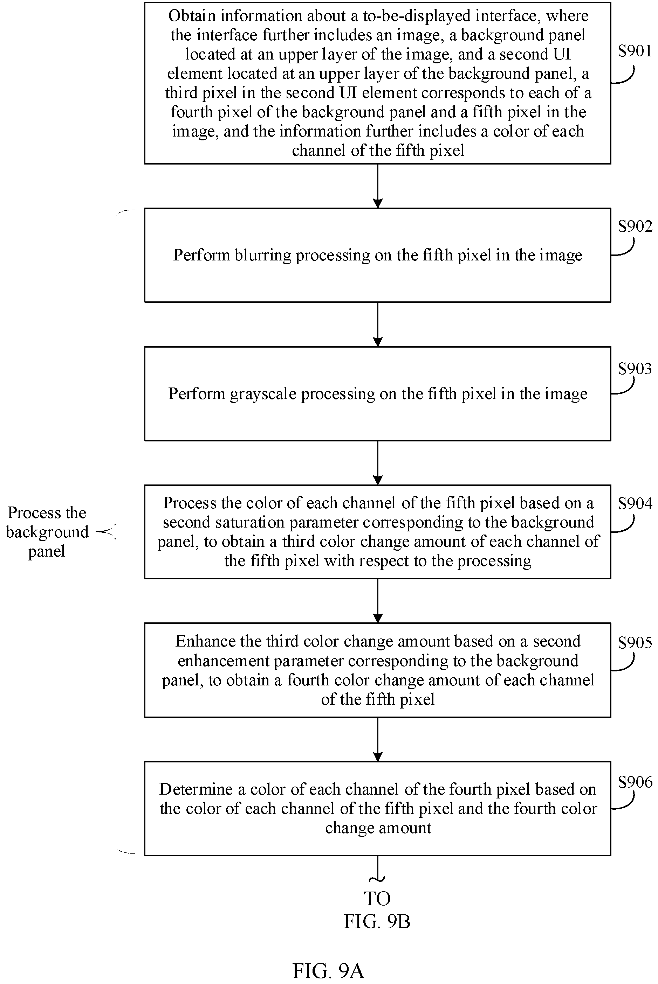

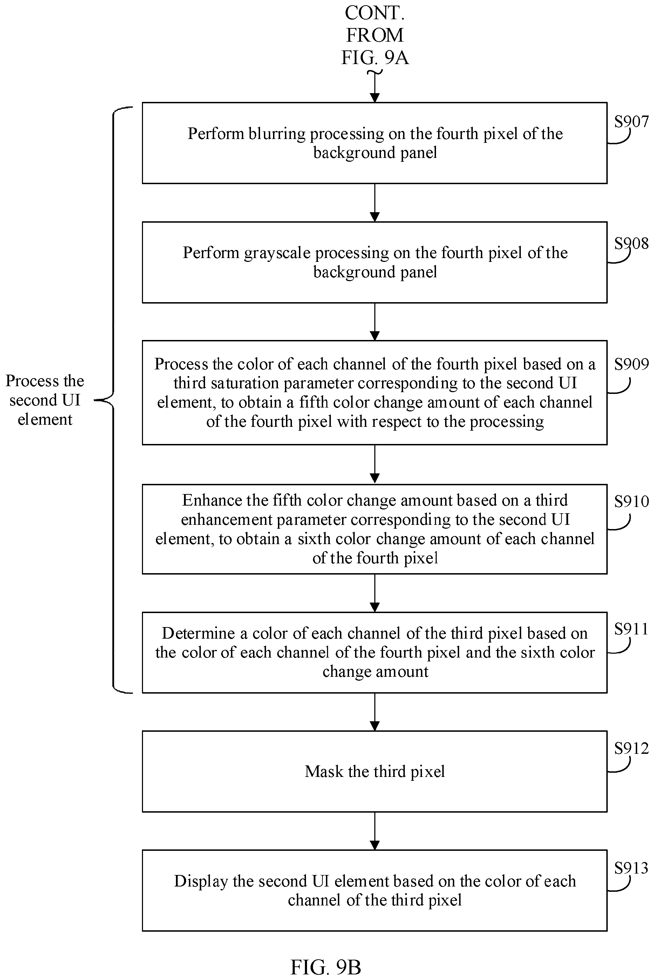

In the foregoing embodiments, an example in which a first UI element has no background panel is used. In the following embodiments, an example in which a second UI element in an interface has a background panel is used for description. Different from the first UI element, the second UI element has a background panel at a lower layer. Therefore, when processing the second UI element, an electronic device further needs to process the background panel. For this, refer to descriptions in FIG. 9A and FIG. 9B.

FIG. 9A and FIG. 9B is a schematic flowchart of another embodiment of an interface processing method according to an embodiment of this application. As shown in FIG. 9A and FIG. 9B, the interface processing method provided in this embodiment of this application may include the following steps.

S901: Obtain information about a to-be-displayed interface, where the interface further includes an image, a background panel located at an upper layer of the image, and a second UI element located at an upper layer of the background panel, a third pixel in the second UI element corresponds to each of a fourth pixel of the background panel and a fifth pixel in the image, and the information further includes a color of each channel of the fifth pixel.

Before displaying the interface, an electronic device may obtain the information about the to-be-displayed interface. In this example, that the second UI element has a background panel is used as an example. Therefore, the interface may include the image, the background panel located at the upper layer of the image, and the second UI element located at the upper layer of the background panel. It should be understood that the interface and the interface in S601 are a same interface. In other words, the interface may include the image and the first UI element located on the image, and the interface may further include the background panel located at the upper layer of the image and the second UI element located at the upper layer of the background panel.

That the background panel is located at the upper layer of the image may be understood as that the layer of the background panel is located at the upper layer of the layer of the image. Similarly, that the second UI element is located at the upper layer of the background panel may be understood as that the layer at which the second UI element is located is located at the upper layer of the layer at which the background panel is located. In this example, the second UI element may shield a part of the background panel, and the background panel may shield a part of the image.

It should be understood that before displaying the interface, the electronic device may perform layer composition processing on layers that constitute the interface. The electronic device may perform, in an up-down sequence of the layers, layer composition on the layer at which the second UI element is located, the layer at which the background panel is located, and the layer at which the image is located, place the layer at which the second UI element is located at the upper layer of the layer at which the background panel is located, and place the layer at which the background panel is located at the upper layer of the layer at which the image is located, to obtain the interface. The electronic device may send the interface for display, to display the interface.

For the third pixel, the fourth pixel, and the fifth pixel, refer to the foregoing descriptions of the first pixel and the second pixel, and the third pixel in the second UI element corresponds to each of the fourth pixel of the background panel and the fifth pixel in the image. For descriptions of a correspondence between pixels, refer to related descriptions of a correspondence between the first pixel and the second pixel in S901.

In some embodiments, the information about the interface includes the color of each channel of the fifth pixel. For example, a channel of the interface includes RGB channels. The information about the interface may include a red value of an R channel, a green value of a G channel, and a blue value of a B channel in the fifth pixel.

It should be understood that S902 to S906 are a process in which the electronic device processes the background panel, and S907 to S911 are a process in which the electronic device processes the second UI element. It should be understood that the process in which the electronic device processes the background panel and the process in which the electronic device processes the second UI element are similar, but are specific to different pixels. For example, when processing the background panel, the electronic device processes the fifth pixel in the image at the lower layer of the background panel, and when processing the second UI element, the electronic device processes the fourth pixel in the background panel at the lower layer of the second element. An objective of such a setting is that the electronic device processes the background panel to see a color of the lower-layer image through the background panel. Therefore, the electronic device processes the fifth pixel in the image at the lower layer of the background panel. Similarly, the electronic device processes the second UI element to see, through the second UI element, a color that is of a lower layer and that penetrates. Therefore, the electronic device processes the fourth pixel in the image at the lower layer of the second UI element.

S902: Perform blurring processing on the fifth pixel in the image.

S903: Perform grayscale processing on the fifth pixel in the image.

For S902 and S903, refer to descriptions in S602 and S603.

S904: Process the color of each channel of the fifth pixel based on a second saturation parameter corresponding to the background panel, to obtain a third color change amount of each channel of the fifth pixel with respect to the processing.

S905: Enhance the third color change amount based on a second enhancement parameter corresponding to the background panel, to obtain a fourth color change amount of each channel of the fifth pixel.

S906: Determine a color of each channel of the fourth pixel based on the color of each channel of the fifth pixel and the fourth color change amount.

In some embodiments, the electronic device may preset the second saturation parameter and the second enhancement parameter that correspond to the background panel. In this example, the electronic device may process the color of each channel of the fifth pixel based on the second saturation parameter corresponding to the background panel, and perform enhancement processing on the third color change amount based on the second enhancement parameter corresponding to the background panel. In this way, the electronic device can determine the color of each channel of the fourth pixel.

In some embodiments, for S904 to S906, refer to a process in which the electronic device processes the second pixel in the image in S604 to S606. A difference from S604 to S606 is as follows: In the embodiment shown in FIG. 6, the first UI element has no background panel, and the lower layer of the first UI element is an image. Therefore, processing performed by the electronic device on the first UI element is performed on the second pixel in the image. However, in this embodiment of this application, the lower layer of the second UI element has a background panel, and the lower layer of the background panel is an image. Therefore, processing performed by the electronic device on the background panel is specific to the fifth pixel in the image, and processing performed by the electronic device on the second UI element is performed on the fourth element of the background panel.

After the electronic device determines the color of each channel of the fourth pixel of the background panel, the electronic device may process the second UI element.

S907: Perform blurring processing on the fourth pixel of the background panel.

S908: Perform grayscale processing on the fourth pixel of the background panel.

In S907 and S908, for blurring processing and grayscale processing performed by the electronic device on the background panel, refer to descriptions of blurring processing and grayscale processing performed by the electronic device on the image in S602 and S603.

S909: Process the color of each channel of the fourth pixel based on a third saturation parameter corresponding to the second UI element, to obtain a fifth color change amount of each channel of the fourth pixel with respect to the processing.

S910: Enhance the fifth color change amount based on a third enhancement parameter corresponding to the second UI element, to obtain a sixth color change amount of each channel of the fourth pixel.

S911: Determine a color of each channel of the third pixel based on the color of each channel of the fourth pixel and the sixth color change amount.

For S909 to S911, refer to the descriptions in S604 to S606. A difference from S604 to S606 is as follows: The lower layer of the first UI element is an image. Therefore, processing performed by the electronic device on the first UI element is performed on the second pixel in the lower-layer image. A background panel exists at the lower layer of the second UI element, and the lower layer of the background panel is an image. Therefore, processing performed by the electronic device on the second UI element is performed on the fourth element of the background panel.

Based on the descriptions in S604, in some embodiments, for different types of UI elements, different saturation parameters may be preset in the electronic device. In this embodiment of this application, the electronic device may select the third saturation parameter corresponding to the second UI element based on a type of the second UI element, and process the color of each channel of the fourth pixel of the background panel, to obtain the fifth color change amount of each channel of the fourth pixel with respect to the processing.

In some embodiments, a plurality of saturation parameters and filtering conditions corresponding to different types of UI elements may be preset in the electronic device. In this embodiment, the electronic device may determine a filtering condition corresponding to the second UI element based on the type of the second UI element. The electronic device may select a third saturation parameter corresponding to the second UI element from the plurality of saturation parameters based on the filtering condition corresponding to the second UI element. The electronic device may process the color of each channel of the fourth pixel based on the third saturation parameter corresponding to the second UI element, to obtain the fifth color change amount of each channel of the fourth pixel with respect to the processing.

S912: Mask the third pixel.

Different from the embodiment shown in FIG. 6, no background panel exists at the lower layer of the first UI element, but a background panel exists at the lower layer of the second UI element. Therefore, the electronic device may mask the third pixel, to obtain a background panel (for example, a rounded rectangle at a lower layer of a text).

S913: Display the second UI element based on the color of each channel of the third pixel.

For S913, refer to the descriptions in S607.

In this embodiment of this application, for the second UI element having a background panel, the electronic device may separately process the background panel and the second UI element, to improve penetrability of an image through the background panel and the second UI element, and improve user immersion.

The embodiment in FIG. 9A and FIG. 9B describes an example in which the second UI element exists at the upper layer of the background panel. In some embodiments, the second UI element does not exist at the upper layer of the background panel. In other words, no UI element shields the background panel. For example, as shown in a flashlight icon 52 and a photographing icon 53 in FIG. 5A, a circle under an icon may be considered as a background panel, and the icon may be considered as a second UI element. A location at which the flashlight icon 52 and the photographing icon 53 are displayed shields the lower-layer background panel, but at a location at which no icon is displayed, no UI element exists at an upper layer of the background panel. For example, as shown in an SMS message card 52 in FIG. 5B, a rounded rectangle may be considered as a background panel, and SMS message content may be considered as a second UI element. An area of the SMS message content does not exist in the SMS message card 52, and a background panel at a lower layer is not shielded. In other words, no UI element exists at an upper layer of the background panel.

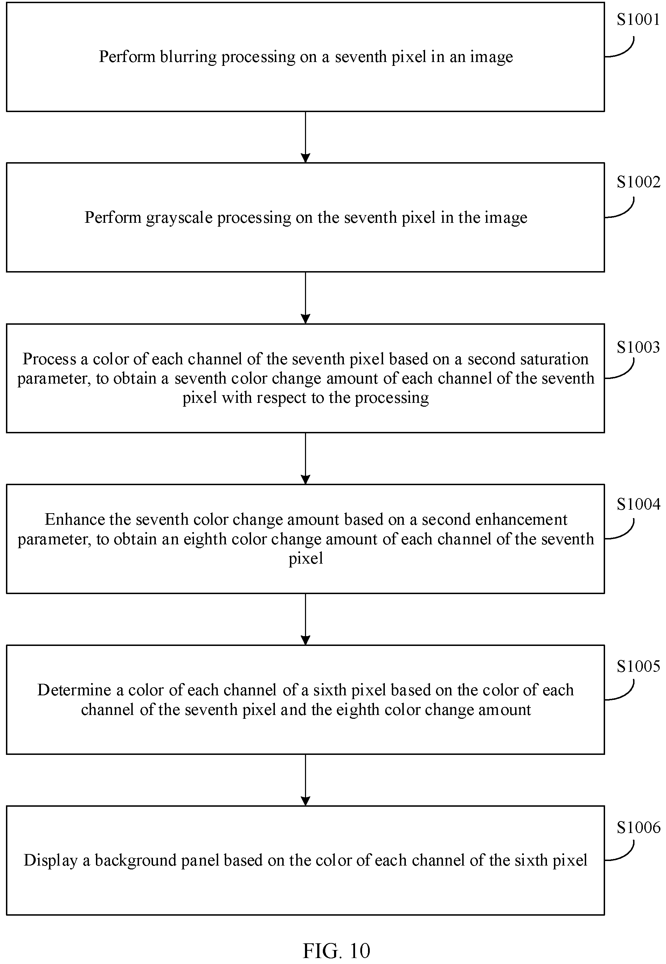

In this scenario, because the second UI element does not exist at the upper layer of the background panel, the background panel is not shielded, and a user may see the background panel. An electronic device may determine a color of each channel of the background panel in a manner shown in FIG. 10, to display the background panel.

In some embodiments, the background panel further includes a sixth pixel, and the second UI element does not shield the sixth pixel. In other words, no UI element exists at an upper layer of the sixth element, and the user may directly see a background panel of the sixth element in an interface. In this example, the sixth pixel corresponds to a seventh pixel in an image. Information about the interface further includes a color of each channel of the seventh pixel.

FIG. 10 shows a process in which an electronic device processes a background panel whose upper layer has no UI element.

S1001: Perform blurring processing on a seventh pixel in an image.

S1002: Perform grayscale processing on the seventh pixel in the image.

For S1001 and S1002, refer to the descriptions in S602 and S603.

S1003: Process a color of each channel of the seventh pixel based on a second saturation parameter, to obtain a seventh color change amount of each channel of the seventh pixel with respect to the processing.

S1004: Enhance the seventh color change amount based on a second enhancement parameter, to obtain an eighth color change amount of each channel of the seventh pixel.

S1005: Determine a color of each channel of a sixth pixel based on the color of each channel of the seventh pixel and the eighth color change amount.

S1006: Display a background panel based on the color of each channel of the sixth pixel.

For S1003 to S1005, refer to the descriptions in S904 to S906.

It should be understood that processing performed by the electronic device on the background panel in FIG. 10 and processing performed by the electronic device on the background panel in FIG. 9A and FIG. 9B have no sequence, and may be performed simultaneously.

In this embodiment of this application, because no UI element exists at an upper layer of the sixth pixel of the background panel, after processing the background panel, the electronic device may directly display the background panel based on the color of each channel of the sixth pixel without a need to superimpose a process of processing the UI element on the background panel.

In this embodiment of this application, for the second UI element having a background panel, the electronic device may process the background panel and the second UI element. In a process in which the electronic device processes the background panel and the second UI element, after performing saturation processing on the color of each channel, for different colors of each channel, the electronic device may further perform enhancement processing to different degrees on the color change amount of each channel, to improve color penetrability. In this way, color fusion between an image and a foreground UI element can be improved, thereby improving immersion of browsing the image and the foreground UI element by a user.

The following describes in detail, based on term descriptions in (1) to (5) in the foregoing embodiments, a process in which an electronic device processes a second UI element having a background panel.

When the electronic device processes the background panel, the electronic device may process a color of each channel of a pixel (for example, a fifth pixel or a seventh pixel) in an image based on a second grayscale parameter corresponding to the background panel. For a meaning of the second grayscale parameter, refer to descriptions of a grayscale parameter. In some embodiments, the second grayscale parameter may be a second grayscale function. For the background panel, the background panel corresponds to the second grayscale function.

A lower layer of the background panel is an image, and a color value of each channel in the image ranges from 0 to 255. Therefore, the electronic device may calculate, within the range from 0 to 255 based on the second grayscale function and a preset function, a second offset area and a second minimum offset that correspond to the second grayscale function. For a specific calculation process, refer to descriptions in (2) "offset area" and (3) "minimum offset" in the foregoing terms.

Similarly, when the electronic device processes the second UI element, the electronic device may process a color of each channel of a fourth pixel of the background panel based on a third grayscale parameter corresponding to the second UI element. For a meaning of the third grayscale parameter, refer to descriptions of a grayscale parameter. In some embodiments, the third grayscale parameter may be a third grayscale function, and for the second UI element, the second UI element corresponds to the third grayscale function.

It should be noted that, a difference between the second UI element and each of the background panel and the first UI element having no background panel is as follows: The lower layer of the background panel is an image, a lower layer of the first UI element is also an image, and a color value of each channel in the image ranges from 0 to 255. A lower layer of the second UI element is the background panel. After the electronic device processes the background panel, a range of a color value of each channel in the background panel changes. For example, the range of the color value of each channel in the background panel is not necessarily 0 to 255, and may be smaller. In some implementations, a range of a color value of each channel in the background panel after processing may be referred to as a valid value range.

Therefore, different from calculating a first offset area, a first minimum offset, a second offset area, and a second minimum offset, when the electronic device calculates a third offset area and a third minimum offset that correspond to the third grayscale function, the electronic device needs to perform calculation based on the third grayscale function and the valid value range, instead of performing calculation based on the range from "0 to 255".

In other words, the third offset area and the third minimum offset are calculated within a range of a color value of each channel of the background panel.

The following describes the valid value range and a process in which the electronic device calculates the third offset area and the third minimum offset based on the third grayscale function and the valid value range. It should be understood that a plurality of grayscale functions and an offset area and a minimum offset that correspond to the grayscale functions may be preset in the electronic device. The offset area and the minimum offset are calculated based on the range from "0 to 255". When the electronic device determines the third grayscale function corresponding to the second UI element from the plurality of grayscale functions, the electronic device may calculate the third offset area and the third minimum offset based on the third grayscale function and the valid numerical range.

(6) Valid value range, third offset area, and third minimum offset

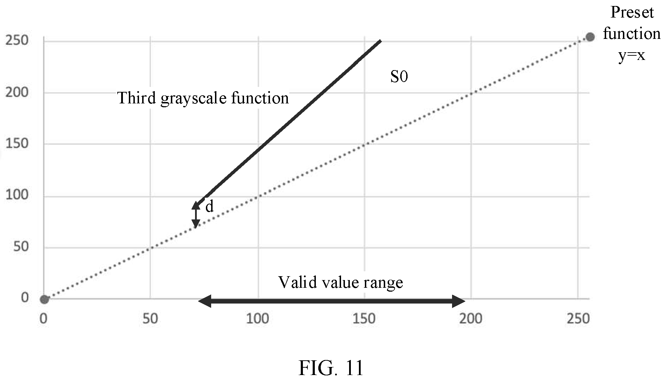

FIG. 11 shows a curve of a third grayscale function and a curve of a preset function. The curve of the third grayscale function is represented as a straight line. For example, after an electronic device processes a background panel, the valid value range may be 75 to 200. In FIG. 11, a solid arrow is used to represent the valid value range.

Within the valid value range, the electronic device may calculate the third offset area and the third minimum offset based on the third grayscale function. As shown in FIG. 11, within the valid value range, there is no intersection point between the curve of the third grayscale function and the curve of the preset function. The third grayscale function is located above the preset function. The electronic device may calculate an area S0 formed between the curve of the third grayscale function and the curve of the preset function in a range of x from 75 to 200. S0 may be used as the third offset area S. For example, S=S0.

Similarly, within the valid value range, the electronic device may calculate "a difference obtained by subtracting a y value of the preset function from a y value of the third grayscale function when x remains the same", to obtain the third minimum offset d, as shown in FIG. 11.

For ease of understanding the interface processing method in the following embodiments, the following terms (7) and (8) are introduced herein:

(7) The second grayscale function and the third grayscale function are in a positive adjustment relationship

The grayscale function is used to perform grayscale brightening or darkening. Grayscale brightening and grayscale darkening are in an inverse adjustment relationship.

The second grayscale function and the third grayscale function are in the positive adjustment relationship, which indicates that both the second grayscale function and the third grayscale function are used to perform grayscale brightening or are used to perform grayscale darkening.

(8) The second grayscale function and the third grayscale function are in an inverse adjustment relationship

The second grayscale function and the third grayscale function are in the inverse adjustment relationship, which indicates that the second grayscale function is used to perform grayscale brightening, and the third grayscale function is used to perform grayscale darkening; or the second grayscale function is used to perform grayscale darkening, and the third grayscale function is used to perform grayscale brightening.

In some embodiments, as shown in FIG. 5A, a flashlight icon 52, a photographing icon 53, and a music capsule 54 have a background panel. As shown in FIG. 5B, a music card 51B, an SMS message card 52B, an incoming call card 53B, and a stacked card 54B of another application have a background panel. These UI elements may be referred to as second UI elements. The electronic device may process, in the method in FIG. 9A and FIG. 9B, a background panel whose upper layer has a UI element at an upper layer and a second UI element; and display the second UI element. In addition, the electronic device may further process, in the method in FIG. 10, a background panel whose upper layer has no UI element; and display the background panel.

To improve image transparency, that is, enable a user to feel that an image color is transparent from the first UI element, and further improve immersion of the user, in some embodiments, for the second UI element having a background panel, grayscale processing on the image in S903 and S1002, grayscale processing on the background panel in S908, saturation processing on the image in S904 and S1003, saturation processing on the background panel in S909, and enhancement processing parameters in S905, S910, and S1004 each are all limited by some filtering conditions. Due to a limitation of the filtering conditions, processing effect can be enhanced, and immersion of the user can be enhanced.

The following first describes filtering conditions of the second grayscale parameter and the third grayscale parameter in the second filtering condition.

In S903 and S 1002, the electronic device may separately process the color of each channel of the fifth pixel and the color of each channel of the seventh pixel based on the second grayscale parameter corresponding to the background panel. In S908, the electronic device may process the color of each channel of the fourth pixel based on a third grayscale parameter corresponding to the second UI element. In the following embodiments, an example in which the second grayscale parameter is a second grayscale function and the third grayscale parameter is a third grayscale function is used for description.

In this embodiment of this application, a plurality of grayscale functions may be preset in the electronic device. Before the electronic device processes the color of each channel of the fifth pixel in the image and the color of each channel of the seventh pixel in the image, the electronic device may select, from the plurality of grayscale functions, the second grayscale function adapted to the background panel. Similarly, before the electronic device processes the color of each channel of the fourth pixel of the background panel, the electronic device may select, from the plurality of grayscale functions, the third grayscale function adapted to the second UI element.

In some embodiments, the second filtering condition may be preset in the electronic device, and the second filtering condition includes a filtering condition of the second grayscale function and a filtering condition of the third grayscale function. In this embodiment, the electronic device may select, from the plurality of grayscale functions based on the second filtering condition, the second grayscale function adapted to the background panel and the third grayscale function adapted to the second UI element.

In some embodiments, the second filtering condition may include the following filtering condition:

(1) Case 1:

For the second UI elements such as the music card 51B, the SMS message card 52B, the incoming call card 53B, and the stacked card 54B of the another application shown in FIG. 5B, this type of second UI element has a large size, is of low importance to the interface, and has great impact on immersive experience of the user. To achieve color penetrability effect, the filtering condition may limit the following: The second grayscale function and the third grayscale function are in an inverse adjustment relationship. In this way, a difference between a background image and a second UI element in the foreground can be more prominent, and UI readability is improved.

That the second grayscale function and the third grayscale function are in the inverse adjustment relationship indicates:

The second grayscale function is used to perform grayscale brightening, and the third grayscale function is used to perform grayscale darkening. In this example, it can be simply understood as a bright background and a dark foreground.

Alternatively, the second grayscale function is used to perform grayscale darkening, and the third grayscale function is used to perform grayscale brightening. In this example, it can be simply understood as a dark background and a bright foreground.

An offset area indicates grayscale darkening or grayscale brightening. In Case 1, when the second grayscale function and the third grayscale function are in the inverse adjustment relationship, the second offset area is a positive value, and the third offset area is a negative value; or the second offset area is a negative value, and the third offset area is a positive value.

To improve filtering accuracy of the second grayscale function and the third grayscale function, in some embodiments, when the second grayscale function and the third grayscale function are in the inverse adjustment relationship, the filtering condition may further limit the following:

An absolute value of the second offset area is greater than a second area threshold, an absolute value of the third offset area is greater than a third area threshold, and a third minimum offset is greater than a first offset threshold. For example, the second area threshold may be 0.1, the third area threshold may be 25/255, and the first offset threshold may be 10/255. An objective of such a setting is to improve a comparison between the image and the background panel and a comparison between the background panel and the second UI element, and improve UI readability.

In some embodiments, the first area threshold is greater than the third area threshold. In other words, compared with the second UI element having a background panel, the first UI element having no background panel corresponds to a larger first area threshold. For example, the first area threshold is 55/255, and the third area threshold may be 25/255. In other words, a grayscale processing degree of the electronic device for the first UI element having no background panel is greater than a grayscale processing degree for the second UI element having a background panel. An objective of such a setting is as follows: Compared with the second UI element having a background panel, the background panel has a specific shielding function for the image, and may enhance readability of the second UI element. However, no background panel exists at the lower layer of the first UI element. Therefore, in this embodiment of this application, the grayscale processing degree for the first UI element needs to be set to be greater. In this way, readability of the first UI element can be improved, so that the user can accurately identify the first UI element.

In some embodiments, an absolute value of the third minimum offset corresponding to the third grayscale function is greater than an absolute value of the second minimum offset corresponding to the second grayscale function. In other words, a minimum offset corresponding to the second UI element in the foreground is greater than a minimum offset corresponding to a background. An objective of such a setting is to improve a comparison between the second UI element in the foreground and the background, and improve readability of the second UI element.

In this embodiment of this application, in Case 1, when the second grayscale function and the third grayscale function are in the inverse adjustment relationship, because grayscale processing of the background is opposite to grayscale processing of the foreground, UI readability can be enhanced.

Case 2:

For the second UI elements such as the flashlight icon 52, the photographing icon 53, and the music capsule 54 shown in FIG. 5A, this type of second UI element has a small size, and is of low importance to the interface. The user has a low readability requirement for these second UI elements. To improve penetrability of the lower-layer image of the second UI element, the second grayscale function and the third grayscale function may be in the positive adjustment relationship. For example, both the second grayscale function and the third grayscale function are used to perform grayscale brightening or are used to perform grayscale darkening.

An offset area indicates grayscale darkening or grayscale brightening. In Case 2, when the second grayscale function and the third grayscale function are in the positive adjustment relationship, the second offset area is a positive value, and the third offset area is a positive value; or the second offset area is a negative value, and the third offset area is a negative value.

To improve filtering accuracy of the second grayscale function and the third grayscale function, in some embodiments, when the second grayscale function and the third grayscale function are in the positive adjustment relationship, the filtering condition may further limit the following:

An absolute value of the third offset area is greater than a second area threshold, and a third minimum offset is greater than a second offset threshold. For example, the second area threshold may be 0.1, and the second offset threshold may be 10/255.

In some embodiments, to improve readability of the UI element, a ratio of a third slope of the third grayscale function to a second slope of the second grayscale function may be limited to be greater than a second threshold. In this way, when the second grayscale function and the third grayscale function are in the positive adjustment relationship, grayscale processing degrees of the electronic device for the background panel and the second UI element are different, so that readability of the UI element can be improved to some extent. For example, the second threshold may be 0.4.

In some embodiments, the first area threshold is greater than the third area threshold.

In this embodiment of this application, for different types second UI elements having a background panel, a second filtering condition is preset in the electronic device, and a filtering condition for filtering the second grayscale function and a filtering condition for filtering the third grayscale function are limited in the second filtering condition, as shown in Case 1 and Case 2. The electronic device may select the second grayscale function and the third grayscale function from the plurality of grayscale functions based on the type of the second UI element having background panel and the second filtering condition corresponding to the second UI element.

(2) The following continues to describe the second filtering condition. The second filtering condition is further used to limit the second enhancement parameter and the third enhancement parameter.

In this embodiment of this application, in S905, the electronic device performs enhancement processing on the third color change amount of each channel of the fifth pixel based on the second enhancement parameter, and in S 1004, the electronic device processes the seventh color change amount of each channel of the seventh pixel based on the second enhancement parameter. In S910, the electronic device processes the sixth color change amount of each channel of the fourth pixel based on the third enhancement parameter.

In some embodiments, when the second grayscale function and the third grayscale function are inversely adjusted, two display effects may be presented: the bright background and the dark foreground; and the dark background and the bright foreground.

The bright background panel and the dark foreground are used as an example. In this scenario, the second grayscale function is used to perform grayscale brightening, and the third grayscale function is used to perform grayscale darkening. To be specific, when the second offset area is a positive value, and the third offset area is a negative value, the electronic device performs grayscale brightening processing on the image, a color value of each channel of the fifth pixel and the seventh pixel increases, brightness increases, and penetrability of the color of each channel increases. In this case, penetrability of red and green is strong. Therefore, penetrability of another color can be enhanced, to improve penetrability of an overall color.

In this scenario, in the second enhancement parameter, the electronic device may set negative enhancement coefficients of a red channel and a green channel to large values, and set positive enhancement coefficients to small values. The negative enhancement coefficients of the red channel and the green channel are greater than positive enhancement coefficients. Therefore, when performing enhancement processing on the color of each channel of the fifth pixel and the seventh pixel, the electronic device may set P1 and P3 that affect red and green to small values, and set P2 and P4 that affect cyan and magenta to large values. In other words, the negative enhancement coefficients of the red channel and the green channel are greater than the positive enhancement coefficients. In other words, P2 and P4 are large values, and P1 and P3 are small values. In some embodiments, for example, P1 is less than P2 and less than P4, and P3 is less than P2 and less than P4.

Similarly, in this scenario, the electronic device performs grayscale darkening processing on the background panel, the color value of each channel of the fourth pixel decreases, brightness decreases, and penetrability of the color of each channel decreases. In this case, red and green are main colors that affect immersion of the user. Because penetrability of red and green is reduced, to improve immersion of the user, penetrability of red and green needs to be enhanced first. Therefore, in this scenario, in the third enhancement parameter, the electronic device may set positive enhancement coefficients of the red channel and the green channel to large values, and set negative enhancement coefficients to small values. The positive enhancement coefficients of the red channel and the green channel are greater than the negative enhancement coefficients. Therefore, when performing enhancement processing on the color of each channel of the fourth channel, the electronic device may set P1 and P3 that affect red and green to large values, penetrability of other colors such as cyan and magenta is reduced, and immersive experience of the user is small. Therefore, the electronic device may set P2 and P4 that affect cyan and magenta to smaller values. In other words, the positive enhancement coefficients of the red channel and the green channel are greater than the negative enhancement coefficient. In other words, P1 and P3 are larger values, and P2 and P4 are smaller values. In some embodiments, for example, P2 is less than P1 and less than P3, and P4 is less than P1 and less than P3.

The dark background and the bright foreground are used as an example. In this scenario, the second grayscale function is used to perform grayscale darkening, and the third grayscale function is used to perform grayscale brightening. To be specific, when the second offset area is a negative value, and the third offset area is a positive value, the electronic device performs grayscale darkening processing on the image, the color value of each channel of the fifth pixel and the seventh pixel decreases, brightness decreases, and penetrability of the color of each channel decreases. In this case, red and green are main colors that affect immersion of the user. Because penetrability of red and green is reduced, to improve immersion of the user, penetrability of red and green needs to be enhanced first. Therefore, in this scenario, in the second enhancement parameter and the third enhancement parameter, the electronic device may set positive enhancement coefficients of the red channel and the green channel to large values, and set negative enhancement coefficients to small values. The positive enhancement coefficients of the red channel and the green channel are greater than the negative enhancement coefficients.

In this scenario, the electronic device performs grayscale darkening processing on the image, so that penetrability of red and green can be reduced. Red and green are main colors that affect immersion of the user. In this case, because penetrability of red and green is reduced, to enhance immersion of the user as much as possible, when performing enhancement processing on the color of each channel, the electronic device may set P1 and P3 that affect red and green to large values, penetrability of other colors such as cyan and magenta is reduced, and immersive experience of the user is small. Therefore, the electronic device may set P2 and P4 that affect cyan and magenta to smaller values. In other words, the positive enhancement coefficients of the red channel and the green channel are greater than the negative enhancement coefficient. In other words, P1 and P3 are larger values, and P2 and P4 are smaller values. In some embodiments, for example, P2 is less than P1 and less than P3, and P4 is less than P1 and less than P3.

In some embodiments, when the second grayscale function and the third grayscale function are positively adjusted, two display effects may be presented: the bright background and the bright foreground; and the dark background and the dark foreground.

The bright background panel and the bright foreground are used as an example. In this scenario, the second grayscale function is used to perform grayscale brightening, and the third grayscale function is used to perform grayscale brightening. To be specific, when the second offset area is a positive value, and the third offset area is a positive value, the electronic device performs grayscale brightening processing on the image, the color value of each channel of the fifth pixel and the seventh pixel increases, brightness increases, and penetrability of the color of each channel increases. In addition, a color value of each channel of the fourth pixel increases, brightness increases, and penetrability of the color of each channel increases.

In this scenario, penetrability of red and green in the image is strong, and penetrability of red and green in the background panel is strong. Therefore, penetrability of another color can be enhanced, to improve penetrability of the entire color. Therefore, in the second enhancement parameter and the third enhancement parameter, the electronic device may set negative enhancement coefficients of the red channel and the green channel to large values, and set positive enhancement coefficients to small values. For a specific setting, refer to the foregoing related descriptions.

The dark background panel and the dark foreground are used as an example. In this scenario, the second grayscale function is used to perform grayscale darkening, and the third grayscale function is used to perform grayscale darkening. To be specific, when the second offset area is a negative value, and the third offset area is a negative value, the electronic device performs grayscale darkening processing on the image, the color value of each channel of the fifth pixel and the seventh pixel decreases, brightness decreases, and penetrability of the color of each channel decreases. In addition, a color value of each channel of the fourth pixel decreases, brightness decreases, and penetrability of the color of each channel decreases.

In this scenario, red and green are main colors that affect immersion of the user. Because penetrability of red and green is reduced, to improve immersion of the user, penetrability of red and green needs to be enhanced first. Therefore, in this scenario, in the second enhancement parameter and the third enhancement parameter, the electronic device may set positive enhancement coefficients of the red channel and the green channel to large values, and set negative enhancement coefficients to small values. For a specific setting, refer to the foregoing related descriptions.

In conclusion, in this embodiment of this application, for the second UI element having a background panel, the electronic device may preset the second filtering condition adapted to the background panel and the second UI element. The electronic device may select, based on the second filtering condition, the second grayscale function and the second enhancement parameter that are adapted to the background panel, and the third grayscale function and the third enhancement parameter that are adapted to the second UI element. In this way, the electronic device processes the background panel based on the second grayscale function and the second enhancement parameter that are adapted to the background panel, and the electronic device processes the second UI element based on the third grayscale function and the third enhancement parameter of the second UI element, to be more adapted to the background panel and the second UI element. In this way, fusion between the second UI element and the background image can be improved, and immersion of the user can be improved.

The following uses two examples to describe the process in which the electronic device processes the second UI element having a background panel.

Example 1: The second grayscale function and the third grayscale function are in the inverse adjustment relationship, which is applicable to the second UI elements such as the music card 51B, the SMS message card 52B, the incoming call card 53B, and the stacked card 54B of the another application shown in FIG. 5B. It should be understood that, in FIG. 12A-a to FIG. 12A-d, that a card is a rounded rectangle is used as an example. Each rounded rectangle represents one card, and a text "OK" on the card represents a second UI element borne on the card.

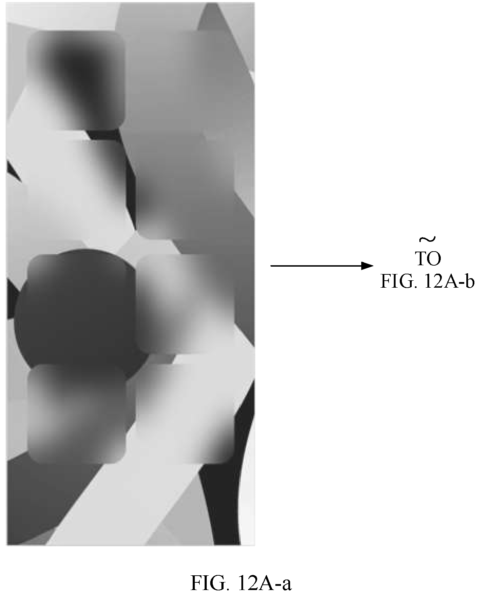

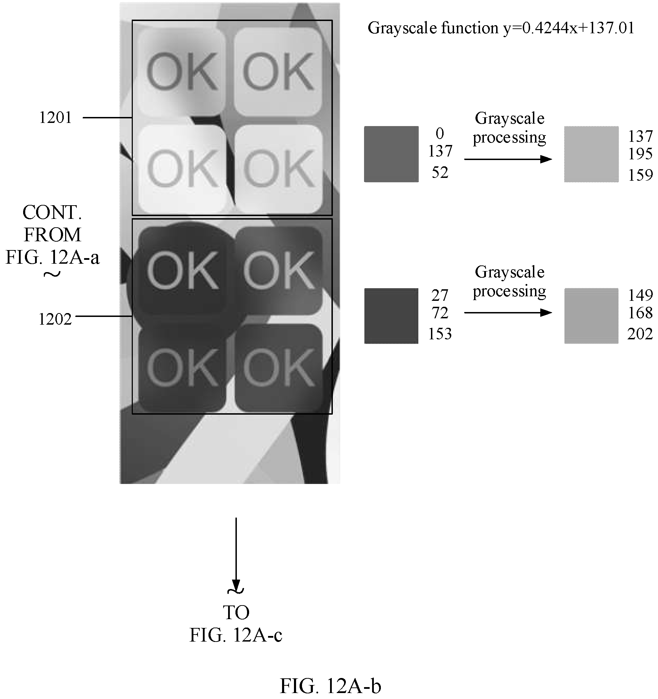

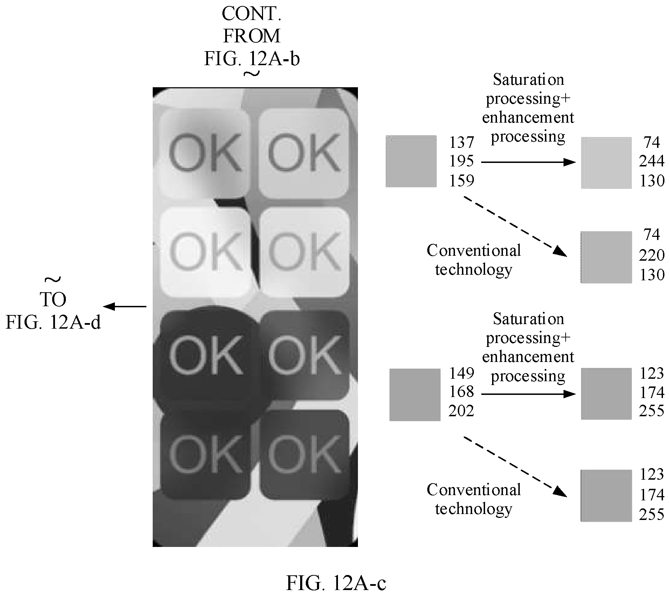

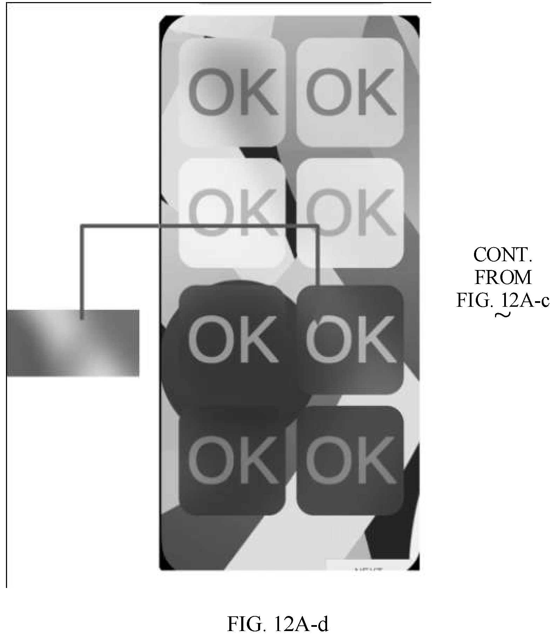

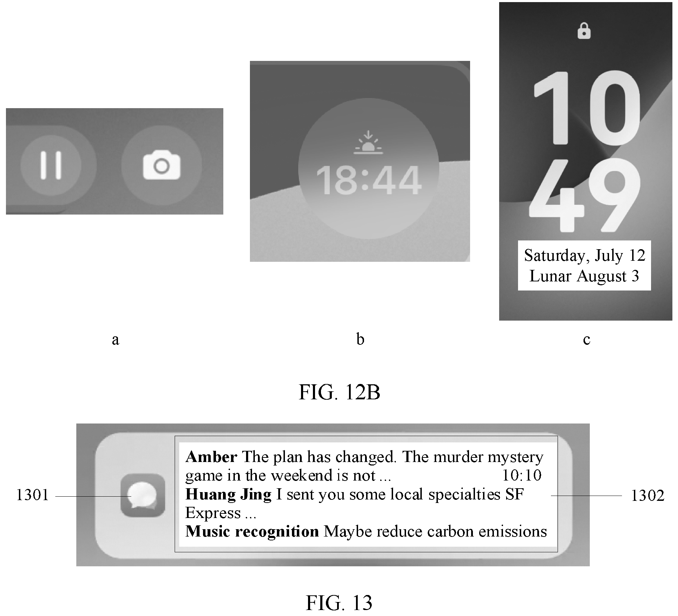

As shown in FIG. 12A-a, the electronic device may perform blurring processing on the image at the lower layer of the background panel, and the user may vaguely see a color of the image at the lower layer of the background panel. As shown in FIG. 12A-b, the electronic device may perform grayscale processing on the background panel and the second UI element. In this example, the electronic device may perform grayscale processing on the background panel based on the second grayscale function, and perform grayscale processing on the second UI element based on the third grayscale function. The second grayscale function and the third grayscale function are in the inverse adjustment relationship.

Because the second grayscale function and the third grayscale function are in the inverse adjustment relationship, effect of the bright background and the dark foreground or effect of the dark background and the bright foreground may be presented. The bright background and the dark foreground mean that the electronic device performs grayscale brightening processing on the fifth element and the seventh element in the image based on the second grayscale function, and performs grayscale darkening processing on the fourth element in the background panel based on the third grayscale function. The dark background and the bright foreground mean that the electronic device performs grayscale darkening processing on the fifth element and the seventh element in the image based on the second grayscale function, and performs grayscale brightening processing on the fourth element in the background panel based on the third grayscale function.

In FIG. 12A-b, to reflect a difference between the two processing manners, an example in which the bright background and the dark foreground are presented in a block 1201 and the dark background and the bright foreground are presented in a block 1202 is used. In FIG. 12A-b, two pixels are used as an example to show grayscale brightening processing performed by the electronic device on the pixels. For example, the grayscale function is "y=0.4244x+137.01". The electronic device calculates color data of each channel of a pixel 1 based on the grayscale function, to obtain a new color value of each channel of the pixel 1. Correspondingly, the color value of each channel of the pixel 1 increases, and brightness of the pixel 1 becomes brighter. For example, the electronic device calculates color data of each channel of a pixel 2 based on the grayscale function, to obtain a new color value of each channel of the pixel 2. Correspondingly, the color value of each channel of the pixel 2 increases, and brightness of the pixel 2 becomes darker.

After the electronic device performs grayscale processing on the background panel and the second UI element, the electronic device may process the fifth element and the seventh element in the image based on the second saturation parameter of the background panel, and process the fourth element in the background panel based on the third saturation parameter of the second UI element. After the electronic device performs grayscale brightening or grayscale darkening on the color of each channel, there is some loss on saturation of the color of each channel. In this case, saturation processing is performed on the color of each channel, so that the color can be transparent.

FIG. 12A-c shows a diagram of effect obtained after the electronic device performs saturation processing on the background panel and the second UI element. Compared with FIG. 12A-b, a color of the background may be more clearly seen through the background panel and the second UI element, but penetrability of the color is still low.

FIG. 12A-c is a diagram of an effect comparison between a processing algorithm in the conventional technology and a processing algorithm in this application. In the conventional technology, a uniform saturation parameter is used to process a color of each channel in a pixel. In this embodiment of this application, for the background panel and the second UI element, the electronic device may perform processing based on different saturation parameters. In addition, after the electronic device processes the background panel and the second UI element based on the saturation parameters, the electronic device may further process a color change amount of each channel based on an enhancement parameter, to improve penetrability of a color of an image, and achieve highly-transparent effect. In other words, the user can clearly understand the color of the image through the background panel and the second UI element.

FIG. 12A-c shows a color value of each channel of the pixel 1 and a pixel 3 that are separately processed in the conventional technology, a color value of each channel of the pixel 1 and the pixel 3 that are separately processed in this application, and a color change obtained through processing. Compared with the conventional technology, in this embodiment of this application, penetrability of the color of the image can be improved, to achieve highly-transparent effect, and improve immersive experience of the user.

FIG. 12A-d shows a diagram of effect obtained after the electronic device performs enhancement processing on the background panel and the second UI element. Compared with FIG. 12A-c, penetrability of the color of the image is enhanced, and the user can more clearly see the color of the image through the background panel and the second UI element.

It may be understood that, because FIG. 12A-a to FIG. 12A-d displays grayscale images. Penetrability of colors of the images may be compared based on "grayscales of colors of the images and grayscales of colors of parts covered by the second UI element and the background panel".

As shown in an enlarged area shown in FIG. 12A-d, it can be seen that colors of the second UI element and the background panel are no longer a uniform color, but correspond to the color of the lower-layer image. In addition, penetrability of the color at the second UI element and the background panel is high, and the color of the lower-layer image can be seen.

Example 2:

The second grayscale function and the third grayscale function are in the positive adjustment relationship, which is applicable to the second UI elements such as the flashlight icon 52, the photographing icon 53, and the music capsule 54 shown in FIG. 5A.

In a in FIG. 12B, a playing icon in the music capsule 54 and the photographing icon 53 are used as an example. In this embodiment of this application, the electronic device may process the background panel (for example, a circle at a lower layer of the image) and the second UI element. For a processing manner, refer to the descriptions in the foregoing embodiments. Because the second grayscale function and the third grayscale function are in the positive adjustment relationship, effect of the bright background and the bright foreground or effect of the dark background and the dark foreground may be presented. In a in FIG. 12B, the bright background and the bright foreground are used as an example. To be specific, the electronic device performs grayscale brightening processing on the fifth pixel and the seventh pixel in the image based on the second grayscale function, and performs grayscale brightening processing on the fourth pixel in the background panel based on the third grayscale function.

Because the second grayscale function and the third grayscale function are in the positive adjustment relationship, through saturation processing and enhancement processing in this embodiment of this application, the second UI element may have highly-transparent effect, and color fusion between the second UI element, the background panel, and the image is improved.

Similarly, in b in FIG. 12B, a time icon having a background panel and a weather icon having a background panel are used as an example. Because the second grayscale function and the third grayscale function are in the positive adjustment relationship, through saturation processing and enhancement processing in this embodiment of this application, the second UI element may have highly-transparent effect, and color fusion between the second UI element, the background panel, and the image is improved.

Similarly, for the first UI element having a background panel, the electronic device may perform grayscale processing, saturation processing, and enhancement processing on the first UI element. In this way, the first UI element can also present highly-transparent effect, and color fusion between the first UI element and the image is improved, as shown by c in FIG. 12B.

In the foregoing embodiments, the first UI element and the second UI element are used as an example to describe a method in which the electronic device processes a same UI element in a same processing manner. In some embodiments, there may be different levels of sub-elements in the UI element. In some embodiments, different levels of sub-elements in a same UI element may be understood as elements of different content types.

For example, as shown in an SMS message card in FIG. 13, the SMS message card includes a Messages application icon 1301 and SMS message content 1302. The SMS message card may be considered as a UI element. As shown in FIG. 13, the SMS message content 1302 may include: a sender name such as "Amber", sending content such as "the plan has changed ...", and sending time "10:10". For example, the SMS message content 1302 includes different levels of sub-elements, and the sender name, the sending content, and the sending time may be considered as different levels of sub-elements.

The user has different UI readability requirements on different levels of sub-elements. For example, the user has a highest requirement on UI readability of the sender name, because the user may determine, based on the sender name, whether to carefully read the SMS message content. The user has a second highest requirement on UI readability of the sending content, because the SMS message card cannot completely display the SMS message content, and the user can only roughly know the SMS message content on the SMS message card. The user has a lowest requirement on UI readability of the sending time.

The second UI element is used as an example. In some embodiments, the sender name may be used as a first-level sub-element, the sending content may be used as a second-level sub-element, and the sending time may be used as a third-level sub-element. That is, the second UI element may include the first-level sub-element, the second-level sub-element, and the third-level sub-element.

In this example, different levels of sub-elements are located at a same layer. For example, the first-level sub-element, the second-level sub-element, and the third-level sub-element are located at a same layer, and the first-level sub-element, the second-level sub-element, and the third-level sub-element do not shield or overlap each other. For example, the first-level sub-element does not shield the second-level sub-element or the third-level sub-element.

It may be understood that, that the electronic device processes the second UI element may be understood as that the electronic device processes different levels of sub-elements in the second UI element. Because the user has different requirements on UI readability of different levels of sub-elements, when processing the different levels of sub-elements, the electronic device may use different grayscale parameters and saturation parameters.

In the following embodiments, the first-level sub-element and the second-level sub-element in the second UI element are used as an example to describe a method in which the electronic device processes different levels of sub-elements in the same UI element.

In some embodiments, the first-level sub-element and the second-level sub-element correspond to different third saturation parameters, and the first-level sub-element and the second-level sub-element correspond to different third grayscale functions. For example, the first-level sub-element corresponds to a saturation parameter 1, and the second-level parameter corresponds to a saturation parameter 2. Because both the first-level sub-element and the second-level sub-element are included in the second UI element, the saturation parameter 1 and the saturation parameter 2 each may be referred to as a third saturation parameter, but the saturation parameter 1 and the saturation parameter 2 are different. Similarly, for example, the first-level sub-element corresponds to a grayscale function 1, and the second-level sub-element corresponds to a grayscale function 2. Because both the first-level sub-element and the second-level sub-element are included in the second UI element, the grayscale function 1 and the grayscale function 2 each may be referred to as a third grayscale function, but the grayscale function 1 and the grayscale function 2 are different.

In some embodiments, for different levels of sub-elements in the UI element, a third filtering condition for saturation parameters and grayscale functions that correspond to the different levels of sub-elements is preset in the electronic device. It should be understood that, after the electronic device selects, based on the first filtering condition or the second filtering condition, a grayscale function, a saturation parameter, and an enhancement parameter that correspond to a UI element, when the UI element includes different levels of sub-elements, the electronic device may further select, based on the third filtering condition from the selected grayscale function and the selected saturation parameter, grayscale functions and saturation parameters that are adapted to the different levels of sub-elements.

For example, a level of the first-level sub-element is higher than a level of the second-level sub-element. For example, the first-level sub-element is the sender name, and the second-level sub-element is the sending content. In some embodiments, the third filtering condition is shown as follows:

(1) A third saturation parameter corresponding to the first-level sub-element is greater than a third saturation parameter corresponding to the second-level sub-element. In other words, a higher level indicates a larger corresponding saturation parameter. In this way, the electronic device has a higher saturation processing degree for a higher-level sub-element, so that the higher-level sub-element has higher readability.

For example, the saturation parameter 1 is greater than the saturation parameter 2. For example, the saturation parameter 1 is n1, and the saturation parameter is n2, where n1>n2. An objective of such a setting is to improve saturation processing on an important first-level sub-element, to improve UI readability of the first-level sub-element.

(2) A third slope of a third grayscale function corresponding to the first-level sub-element is greater than a third slope of a third grayscale function corresponding to the first-level sub-element. For a concept of the third slope, refer to related descriptions of the first slope. For example, a third slope of the grayscale function 1 is greater than a third slope of the grayscale function 2.

Alternatively, an absolute value of a third offset area of the third grayscale function corresponding to the first-level sub-element is greater than an absolute value of a third offset area of the third grayscale function corresponding to the first-level sub-element.

The third slope of the third grayscale function corresponding to the first-level sub-element is greater than the third slope of the third grayscale function corresponding to the first-level sub-element, or the absolute value of the third offset area of the third grayscale function corresponding to the first-level sub-element is greater than the absolute value of the third offset area of the third grayscale function corresponding to the first-level sub-element, which may indicate that the electronic device has a higher grayscale processing degree for a higher-level sub-element. In this way, brightness processing of the higher-level sub-element can be improved, to improve UI readability of the higher-level sub-element.

In some embodiments, the first UI element may include different levels of sub-elements. For the grayscale function and the saturation parameter corresponding to the sub-element, refer to the third filtering condition.

It may be understood that, for different levels of sub-elements, selection of the enhancement parameter is related to a type of the UI element. For details, refer to related descriptions in the first filtering condition and the second filtering condition in the foregoing embodiments.

In this embodiment of this application, for different levels of sub-elements in a same UI element, the third filtering condition may be preset in the electronic device, and the electronic device may select, based on the third filtering condition, grayscale functions and saturation parameters that are adapted to the different levels of sub-elements, so that display of the UI element meets a UI readability requirement of the user.

In some embodiments, the second UI element may be a stacked element. The stacked element may be understood as a stacked element formed by stacking a plurality of UI elements. The stacked element may include but is not limited to a stacked card or a stacked-folder icon.

For example, the second UI element includes a third-level sub-element, a fourth-level sub-element, and a fifth-level sub-element that are stacked from top to bottom. The third-level sub-element is located at an upper layer of the fourth-level sub-element, and the fourth-level sub-element is located at an upper layer of the fifth-level sub-element.

In this example, different levels of sub-elements are located at different layers. That the third-level sub-element is located at the upper layer of the fourth-level sub-element may be understood as that a layer at which the third-level sub-element is located is located at an upper layer of a layer at which the fourth-level sub-element is located. That the fourth-level sub-element is located at the upper layer of the fifth-level sub-element may be understood as that a layer at which the fourth-level sub-element is located is located at an upper layer of a layer at which the fifth-level sub-element is located. A sub-element located at an upper layer shields a sub-element located at a lower layer.

In this embodiment, the third-level sub-element, the fourth-level sub-element, and the fifth-level sub-element correspond to different third grayscale functions. For example, the third-level sub-element corresponds to a grayscale function 3, the fourth-level sub-element corresponds to a grayscale function 4, and the fifth-level sub-element corresponds to a grayscale function 5. Because the third-level sub-element, the fourth-level sub-element, and the fifth-level sub-element are all included in the second UI element, the grayscale function 3, the grayscale function 4, and the grayscale function 5 each may be referred to as a third grayscale function.

In some embodiments, to enable the user to see a difference between different levels of sub-elements, so that the different levels of sub-elements can be distinguished, the grayscale function 3, the grayscale function 4, and the grayscale function 5 are different from each other.

In some embodiments, because the third-level sub-element is located at the upper layer of the fourth-level sub-element, and the fourth-level sub-element is located at the upper layer of the fifth-level sub-element, to enable the user to have a progressive feeling, the following fourth filtering condition may be set for a third grayscale function corresponding to each of the third-level sub-element, the fourth-level sub-element, and the fifth-level sub-element:

When x values are the same, a y value of a third grayscale function corresponding to the third-level sub-element, a y value of a third grayscale function corresponding to the fourth-level sub-element, and a y value of a third grayscale function corresponding to the fifth-level sub-element are in an arithmetic sequence. In other words, when processing different levels of sub-elements, the electronic device may use different grayscale processing degrees. In addition, from bottom to top, the grayscale processing degrees may be in ascending order or in descending order. In this way, different levels of elements can present hierarchical progressive effect.

In some embodiments, because the third-level sub-element is located at a topmost layer and has greatest impact on immersive experience of the user, it may be set that a slope of the third grayscale function (for example, the grayscale function 3) corresponding to the third-level sub-element is the largest, a slope of the third grayscale function (for example, the grayscale function 4) corresponding to the fourth-level sub-element is the second largest, and a slope of the third grayscale function (for example, the grayscale function 5) corresponding to the fifth-level sub-element is the smallest. Based on such a setting, the electronic device has a highest grayscale processing degree for the upper-layer third-level sub-element, so that UI readability of the third-level sub-element is improved.

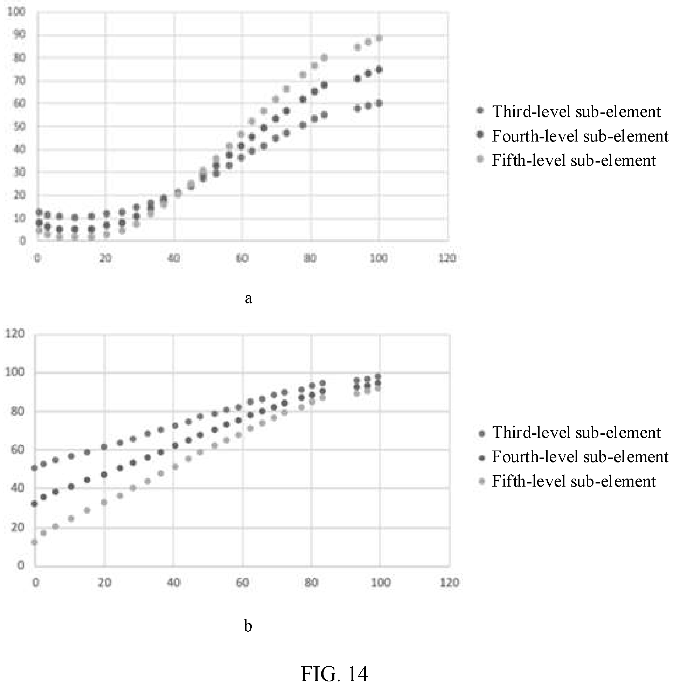

In some embodiments, in other words, the slope of the third grayscale function corresponding to the third-level sub-element, the slope of the third grayscale function corresponding to the fourth-level sub-element, and the slope of the third grayscale function corresponding to the fifth-level sub-element are in an arithmetic sequence. For example, a in FIG. 14 is a diagram of a third grayscale function corresponding to a third-level sub-element, a third grayscale function corresponding to a fourth-level sub-element, and a third grayscale function corresponding to a fifth-level sub-element. b in FIG. 14 is another diagram of a third grayscale function corresponding to a third-level sub-element, a third grayscale function corresponding to a fourth-level sub-element, and a third grayscale function corresponding to a fifth-level sub-element.

In this embodiment of this application, for different levels of sub-elements in a same UI element, a fourth filtering condition for filtering a sub-element may be preset. The electronic device may select, based on the fourth filtering condition, grayscale functions adapted to the different levels of sub-elements, so that display of the UI element meets a UI readability requirement of the user.

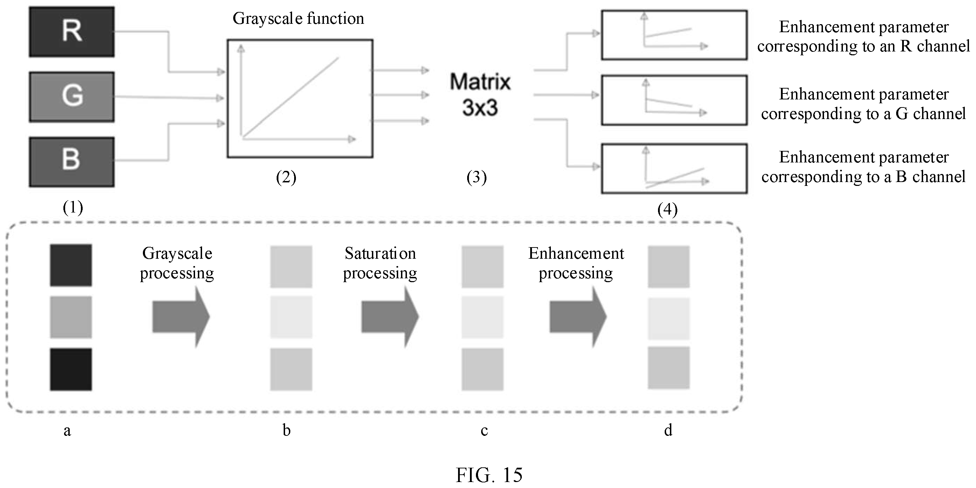

In conclusion, regardless of whether the electronic device processes different types of UI elements or processes different levels of sub-elements in the UI element, a processing process of the electronic device may include step 1A to step 4A shown in FIG. 4. It should be understood that processing steps in FIG. 4 are shown in FIG. 15 by using a change in a color of each channel. It should be understood that in FIG. 15, step 1A and step 4A are not shown, and step 2A, step 3A, and step 3B are shown.

Through processing in step 1A, the color of each channel of the pixel is shown in a in FIG. 15. In FIG. 15, that the channel of the pixel includes RGB three channels is used as an example, as shown in (1) in FIG. 15. Grayscale brightening is used as an example. The electronic device may process the color of each channel of the pixel based on the grayscale function. A color that is of each channel of the pixel and that is obtained through grayscale brightening is shown in b in FIG.

15. It should be understood that a curve of the grayscale function may be shown in (2) in FIG. 15.

The electronic device may perform saturation processing on the color of each channel of the pixel based on the saturation parameter. A color that is of each channel of the pixel and that is obtained through saturation processing is shown in c in FIG. 15. It should be understood that, in (3) in FIG. 15, that saturation processing is performed on the color of each channel of the pixel based on a 3×3 saturation matrix is used as an example. For a specific saturation processing process, refer to descriptions in Formula 1, Formula 3, and Formula 5. After the electronic device performs saturation processing on the color of each channel of the pixel, the electronic device may further process the color change amount of each channel of the pixel based on the enhancement parameter, to improve penetrability of the color, improve fusion between a background image color and a foreground UI element, and improve immersion of the user. As shown in (4) in FIG. 15, that the enhancement parameter is represented as a function is used as an example. Different channels correspond to different enhancement parameters. In other words, the electronic device has different enhancement degrees for different color change amounts.

For an implementation principle and technical effects of this embodiment of this application, refer to the descriptions in the foregoing embodiments. Details are not described herein again.

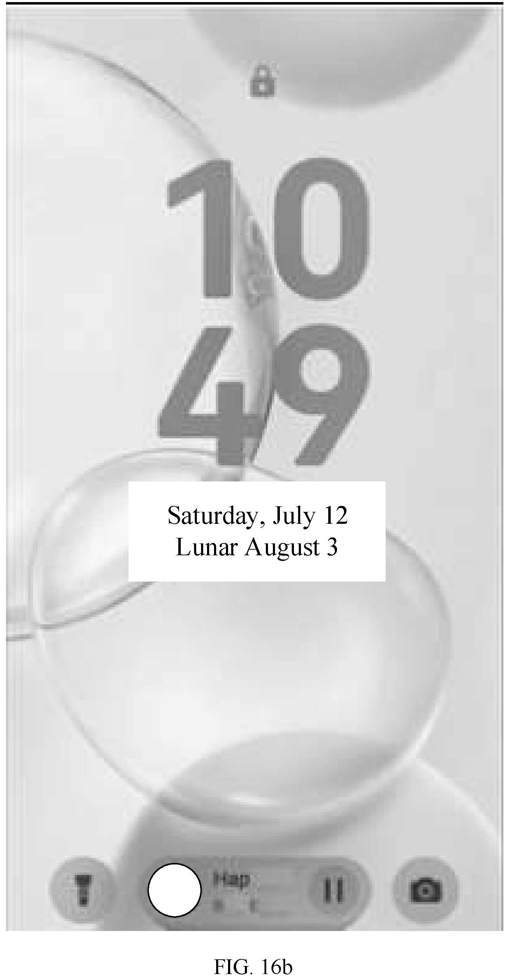

In conclusion, FIG. 16a to FIG. 16d are a diagram of several interfaces obtained through processing in this embodiment of this application. As shown in a and FIG. 16b, an element in a lock screen interface may be considered as a first UI element. The electronic device processes the interface in the method shown in FIG. 6 based on the first filtering condition, and the third filtering condition, and the first UI element in the interface may have highly-transparent effect.

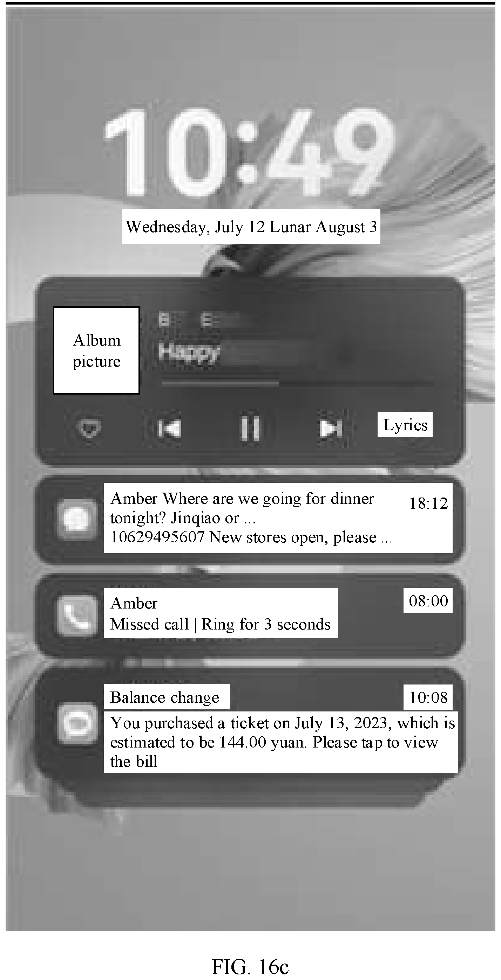

As shown in FIG. 16c, texts such as time and date in a lock screen interface may be considered as first UI elements, and a card and a stacked card may be considered as second UI elements. For the first UI element, the electronic device processes the interface in the method shown in FIG. 6 based on the first filtering condition, and the third filtering condition, and the first UI element in the interface may have highly-transparent effect. For the second UI element, the electronic device may process the interface in the method shown in FIG. 9A and FIG. 9B and FIG. 10 based on the second filtering condition, the third filtering condition, and the fourth filtering condition, to improve penetrability of the color of the image.

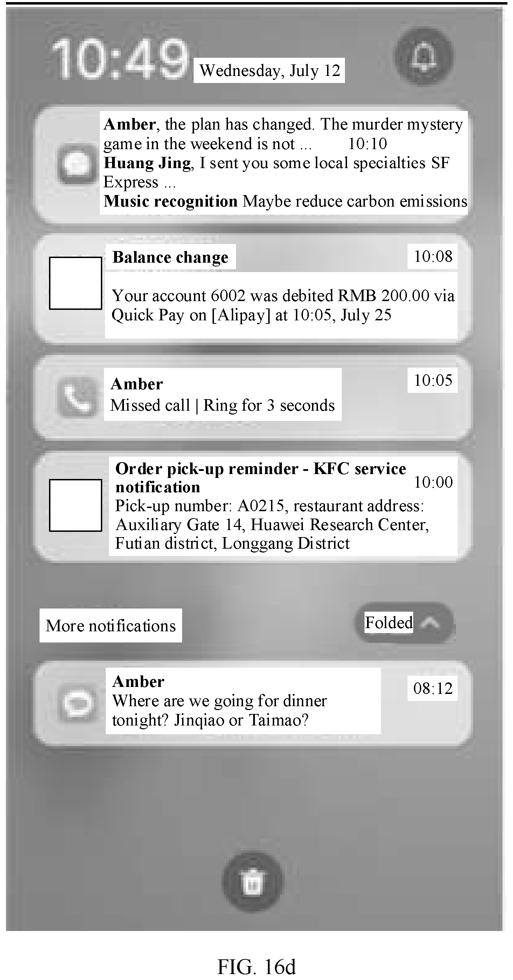

Similarly, as shown in FIG. 16d, texts such as time and date in a lock screen interface may be considered as first UI elements, and a card may be considered as a second UI element. For the first UI element, the electronic device processes the interface in the method shown in FIG. 6 based on the first filtering condition, and the third filtering condition, and the first UI element in the interface may have highly-transparent effect. For the second UI element, the electronic device may process the interface in the method shown in FIG. 9A and FIG. 9B and FIG. 10 based on the second filtering condition and the third filtering condition, to improve penetrability of the color of the image.

It should be noted that data (including but not limited to data used for analysis, stored data, displayed data, and the like) in this application are information and data for which an authorization is obtained from a user or a full authorization is obtained from each party, and the collection, use, and processing of related data need to comply with related laws, regulations, and standards of related countries and regions. Corresponding operation entries are provided for the user to choose to authorize or deny.

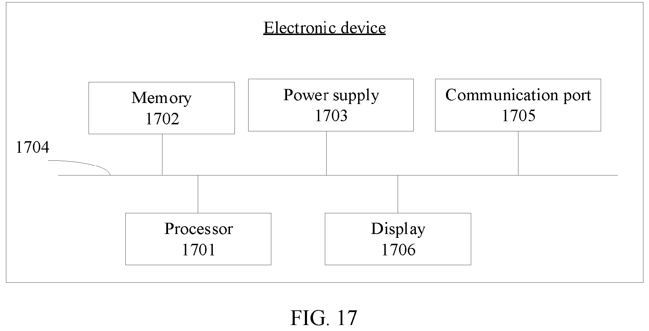

In an embodiment, an embodiment of this application further provides an electronic device. As shown in FIG. 17, the electronic device may include a processor 1701 (for example, a CPU) and a memory 1702. The memory 1702 may include a high-speed random access memory (random access memory, RAM), or may include a non-volatile memory (non-volatile memory, NVM), for example, at least one disk memory. The memory 1702 may store various instructions, to complete various processing functions and implement the method steps of this application.

Optionally, the electronic device in this application may further include a power supply 1703, a communication bus 1704, and a communication port 1705. The communication port 1705 is configured to implement a connection and communication between the electronic device and another peripheral device. In this embodiment of this application, the memory 1702 is configured to store computer-executable program code. The program code includes instructions. When the processor 1701 executes the instructions, the instructions cause the processor 1701 of the electronic device to perform the actions in the foregoing method embodiments. Implementation principles and technical effects thereof are similar. Details are not described herein again.

Optionally, the electronic device in this application may further include a display 1706. The display 1706 is configured to display an interface of the electronic device.

It should be noted that the modules or components in the foregoing embodiments may be configured as one or more integrated circuits for implementing the foregoing methods, for example, one or more application-specific integrated circuits (application-specific integrated circuit, ASIC), one or more digital signal processors (digital signal processor, DSP), or one or more field programmable gate arrays (field programmable gate array, FPGA). For another example, when one of the foregoing modules is implemented in a form of scheduling program code by a processing element, the processing element may be a general-purpose processor, for example, a central processing unit (central processing unit, CPU) or another processor that can call the program code, for example, a controller. For another example, the modules may be integrated and implemented in a form of a system-on-a-chip (system-on-a-chip, SOC).

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

The term "a plurality of" in this specification refers to two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects. In addition, it should be understood that in description of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

**Claims**

**1.** An interface processing method, applied to an electronic device, wherein the method comprises:

obtaining information about a to-be-displayed interface, wherein the interface comprises an image and a first user interface UI element located at an upper layer of the image, a first pixel in the first UI element corresponds to a second pixel in the image, and the information comprises a color of each channel of the second pixel;
processing the color of each channel of the second pixel based on a first saturation parameter corresponding to the first UI element, to obtain a first color change amount of each channel of the second pixel with respect to the processing;
enhancing the first color change amount based on a first enhancement parameter corresponding to the first UI element, to obtain a second color change amount of each channel of the second pixel, wherein the first enhancement parameter comprises an enhancement coefficient of each channel, and enhancement coefficients of different channels are different;
determining a color of each channel of the first pixel based on the color of each channel of the second pixel and the second color change amount; and
displaying the first UI element based on the color of each channel of the first pixel.

**2.** The method according to claim 1, wherein the interface further comprises a background panel located at an upper layer of the image and a second UI element located at an upper layer of the background panel, a third pixel in the second UI element corresponds to each of a fourth pixel of the background panel and a fifth pixel in the image, the information further comprises a color of each channel of the fifth pixel, and the method further comprises:

processing the color of each channel of the fifth pixel based on a second saturation parameter corresponding to the background panel, to obtain a third color change amount of each channel of the fifth pixel with respect to the processing;
enhancing the third color change amount based on a second enhancement parameter corresponding to the background panel, to obtain a fourth color change amount of each channel of the fifth pixel;

determining a color of each channel of the fourth pixel based on the color of each channel of the fifth pixel and the fourth color change amount;

processing the color of each channel of the fourth pixel based on a third saturation parameter corresponding to the second UI element, to obtain a fifth color change amount of each channel of the fourth pixel with respect to the processing;

enhancing the fifth color change amount based on a third enhancement parameter corresponding to the second UI element, to obtain a sixth color change amount of each channel of the fourth pixel;

determining a color of each channel of the third pixel based on the color of each channel of the fourth pixel and the sixth color change amount; and

displaying the second UI element based on the color of each channel of the third pixel.

3. The method according to claim 2, wherein the background panel further comprises a sixth pixel, the second UI element does not shield the sixth pixel, the sixth pixel corresponds to a seventh pixel in the image, the information further comprises a color of each channel of the seventh pixel, and the method further comprises:

processing the color of each channel of the seventh pixel based on the second saturation parameter, to obtain a seventh color change amount of each channel of the seventh pixel with respect to the processing;

enhancing the seventh color change amount based on the second enhancement parameter, to obtain an eighth color change amount of each channel of the seventh pixel;

determining a color of each channel of the sixth pixel based on the color of each channel of the seventh pixel and the eighth color change amount; and

displaying the background panel based on the color of each channel of the sixth pixel.

4. The method according to claim 1, wherein before processing the color of each channel of the second pixel based on the first saturation parameter corresponding to the first UI element, the method further comprises:
processing the color of each channel of the second pixel based on a first grayscale parameter corresponding to the first UI element.

5. The method according to claim 4, wherein the first grayscale parameter is a first grayscale function, an absolute value of a first offset area corresponding to the first grayscale function is greater than a first area threshold, the first offset area is an offset area of a curve of the first grayscale function relative to a curve of a preset function, and the preset function is a directly proportional function and is an odd function.

6. The method according to claim 5, wherein a first slope of the first grayscale function is greater than a first threshold.

7. The method according to claim 6, wherein the first enhancement parameter specifically comprises a positive enhancement coefficient and a negative enhancement coefficient of each channel, the positive enhancement coefficient is used when a color change amount of the channel is a positive value, and the negative enhancement coefficient is used when the color change amount of the channel is a negative value; and

when the first offset area is a positive value, in the first enhancement parameter, negative enhancement coefficients of a red channel and a green channel are greater than positive enhancement coefficients; or

when the first offset area is a negative value, in the first enhancement parameter, positive enhancement coefficients of a red channel and a green channel are greater than negative enhancement coefficients.

8. The method according to claim 2 or 3, wherein before processing the color of each channel of the fifth pixel based on the second saturation parameter corresponding to the background panel, the method further comprises:

processing the color of each channel of the fifth pixel based on a second grayscale parameter corresponding to the background panel; and

before processing the color of each channel of the fourth pixel based on the third saturation parameter corresponding to the second UI element, the method comprises:

processing the color of each channel of the fourth pixel based on a third grayscale parameter corresponding to the second UI element.

9. The method according to claim 8, wherein the second grayscale parameter is a second grayscale function, the third grayscale parameter is a third grayscale function, and the second grayscale function and the third grayscale function are in an inverse adjustment relationship, or the second grayscale function and the third grayscale function are in a positive adjustment relationship;
when the second grayscale function and the third grayscale function are in the inverse adjustment relationship:

a second offset area corresponding to the second grayscale function is a positive value, a third offset area corresponding to the third grayscale function is a negative value, the second offset area is an offset area of a curve of the second grayscale function relative to a curve of a preset function, the preset function is a directly proportional function and is an odd function, and the third offset area is an offset area of a curve of the third grayscale function relative to the curve of the preset function; or

the second offset area is a negative value, and the third offset area is a positive value; and

when the second grayscale function and the third grayscale function are in the positive adjustment relationship:

the second offset area is a positive value, and the third offset area is a positive value; or

the second offset area is a negative value, and the third offset area is a negative value.

10. The method according to claim 9, wherein when the second grayscale function and the third grayscale function are in the inverse adjustment relationship, an absolute value of the second offset area is greater than a second area threshold, an absolute value of the third offset area is greater than a third area threshold, a third minimum offset is greater than a first offset threshold, and the third minimum offset is an absolute value of a minimum difference between a y value of the third grayscale function and a y value of the preset function when x remains the same.

11. The method according to claim 10, wherein the third minimum offset is greater than a second minimum offset, and the second minimum offset is an absolute value of a minimum difference between a y value of the second grayscale function and the y value of the preset function when x remains the same.

12. The method according to claim 9, wherein when the second grayscale function and the third grayscale function are in the positive adjustment relationship, an absolute value of the third offset area is greater than a second area threshold, a third minimum offset is greater than a second offset threshold, and the third minimum offset is an absolute value of a minimum difference between a y value of the third grayscale function and a y value of the preset function when x remains the same.

13. The method according to claim 10 or 11, wherein a first area threshold is greater than the third area threshold.

14. The method according to claim 12 or 13, wherein a ratio of a third slope of the third grayscale function to a second slope of the second grayscale function is greater than a second threshold.

15. The method according to any one of claims 10 to 14, wherein the third offset area and the third minimum offset are calculated within a range of a color value of each channel of the background panel.

16. The method according to any one of claims 9 to 15, wherein the second enhancement parameter and the third enhancement parameter specifically comprise a positive enhancement coefficient and a negative enhancement coefficient of each channel, the positive enhancement coefficient is used when a color change amount of the channel is a positive value, and the negative enhancement coefficient is used when the color change amount of the channel is a negative value; and

when the second grayscale function and the third grayscale function are in the inverse adjustment relationship and the second offset area is a positive value, in the second enhancement parameter, negative enhancement coefficients of a red channel and a green channel are greater than positive enhancement coefficients, and in the third enhancement parameter, positive enhancement coefficients of the red channel and the green channel are greater than negative enhancement coefficients; or

when the second grayscale function and the third grayscale function are in the inverse adjustment relationship and the second offset area is a negative value, in the second enhancement parameter and the third enhancement parameter, positive enhancement coefficients of a red channel and a green channel are greater than negative enhancement coefficients; or

when the second grayscale function and the third grayscale function are in the positive adjustment relationship and the second offset area is a positive value, in the second enhancement parameter and the third enhancement parameter, negative enhancement coefficients of a red channel and a green channel are greater than positive enhancement coefficients; or

when the second grayscale function and the third grayscale function are in the positive adjustment relationship and the second offset area is a negative value, in the second enhancement parameter and the third enhancement parameter, positive enhancement coefficients of a red channel and a green channel are greater than negative enhancement coefficients.

17. The method according to claim 9, wherein the second UI element comprises a first-level sub-element and a second-level sub-element, the first-level sub-element and the second-level sub-element correspond to different third saturation parameters, and the first-level sub-element and the second-level sub-element correspond to different third grayscale functions.

18. The method according to claim 17, wherein a level of the first-level sub-element is higher than a level of the second-level sub-element, a third saturation parameter corresponding to the first-level sub-element is greater than a third saturation parameter corresponding to the second-level sub-element, and a third slope of a third grayscale function corresponding to the first-level sub-element is greater than a third slope of a third grayscale function corresponding to the first-level sub-element.

19. The method according to claim 9, wherein the second UI element comprising a third-level sub-element, a fourth-level sub-element, and a fifth-level sub-element that are stacked from top to bottom, the third-level sub-element is located at an upper layer of the fourth-level sub-element, and the fourth-level sub-element is located at an upper layer of the fifth-level sub-element; and

the third-level sub-element, the fourth-level sub-element, and the fifth-level sub-element correspond to different third grayscale functions.

20. The method according to claim 19, wherein when x values are the same, a y value of a third grayscale function corresponding to the third-level sub-element, a y value of a third grayscale function corresponding to the fourth-level sub-element, and a y value of a third grayscale function corresponding to the fifth-level sub-element are in an arithmetic sequence.

21. The method according to claim 1, wherein before displaying the first UI element, the method further comprises: performing masking processing on the first UI element.

22. The method according to claim 3, wherein before displaying the second UI element, the method comprises:

performing masking processing on the second UI element; and
before displaying the background panel, the method further comprises:
performing masking processing on the background panel.

23. An electronic device, wherein the electronic device comprises one or more processors and a memory; and the memory is coupled to the one or more processors, the memory is configured to store computer program code, the computer program code comprises computer instructions, and the one or more processors invoke the computer instructions, so that the electronic device performs the method according to any one of claims 1 to 22.

24. A chip system, wherein the chip system is used in an electronic device, the chip system comprises one or more processors, and the one or more processors are configured to invoke computer instructions to enable the electronic device to perform the method according to any one of claims 1 to 22.

25. A computer-readable storage medium, wherein the computer-readable storage medium comprises computer instructions, and when the computer instructions are run on an electronic device, the electronic device is enabled to perform the method according to any one of claims 1 to 22.

26. A computer program product, wherein the computer program product comprises computer program code, and when the computer program code is run on an electronic device, the electronic device is enabled to perform the method according to any one of claims 1 to 22.

10:49

Wednesday, July 12 Lunar August 3

B E

Album
picture

Happy

♡  ⏮  ⏸  ⏭  Lyrics                    —— 11

Amber Where are we going for dinner    18:12
tonight? Jinqiao or ...                            —— 12
10629495607 New stores open, please ...

Amber                                   08:00
Missed call | Ring for 3 seconds               —— 13

Balance change                          10:08
You purchased a ticket on July 13, 2023, which
is estimated to be 144.00 yuan. Please tap to
view the bill                                   —— 14

FIG. 1

201

16:03 Friday, January 26

WLAN

Bluetooth

Sound

Auto-rotate

Airplane mode

Flashlight

Background panel

Mobile data

Mobile hotspot

Power saving mode

Location

Connected to Windows

Screenshot

Screen recorder

S share No

Eye comfort

Dark mode

Background panel

Smart View Screen mirroring

Device control

FIG. 2

Step 1: Lower-layer image blurring processing

Step 2: Grayscale brightening or darkening

Step 3: Saturation processing

Step 4: Masking

FIG. 3

Step 1A: Lower-layer image blurring processing

Step 2A: Grayscale brightening or darkening

Step 3A: Saturation processing

**Step 3B: Enhancement processing**

Step 4A: Masking

FIG. 4

Saturday, July 12
Lunar August 3

51

52

53

54

FIG. 5A

10:49

Wednesday, July 12 Lunar August 3

Album picture

B.    E

Happy

— 51B

♡    |◀    ❙❙    ▶|    Lyrics

Amber Where are we going for dinner    18:12
tonight? Jinqiao or ...
10629495607 New stores open, please ...    — 52B

Amber    08:00
Missed call | Ring for 3 seconds    — 53B

Balance change    10:08
You purchased a ticket on July 13, 2023, which is
estimated to be 144.00 yuan. Please tap to view
the bill    — 54B

FIG. 5B

Obtain information about a to-be-displayed interface, where the interface includes an image and a first UI element located at an upper layer of the image, a first pixel in the first UI element corresponds to a second pixel in the image, and the information includes a color of each channel of the second pixel $\quad$ S601

Perform blurring processing on the second pixel in the image $\quad$ S602

Perform grayscale processing on the second pixel in the image $\quad$ S603

Process the color of each channel of the second pixel based on a first saturation parameter corresponding to the first UI element, to obtain a first color change amount of each channel of the second pixel with respect to the processing $\quad$ S604

Enhance the first color change amount based on a first enhancement parameter corresponding to the first UI element, to obtain a second color change amount of each channel of the second pixel, where the first enhancement parameter includes an enhancement coefficient of each channel, and enhancement coefficients of different channels are different $\quad$ S605

Determine a color of each channel of the first pixel based on the color of each channel of the second pixel and the second color change amount $\quad$ S606

Display the first UI element based on the color of each channel of the first pixel $\quad$ S607

FIG. 6

FIG. 7

FIG. 8

Obtain information about a to-be-displayed interface, where the interface further includes an image, a background panel located at an upper layer of the image, and a second UI element located at an upper layer of the background panel, a third pixel in the second UI element corresponds to each of a fourth pixel of the background panel and a fifth pixel in the image, and the information further includes a color of each channel of the fifth pixel — S901

Perform blurring processing on the fifth pixel in the image — S902

Perform grayscale processing on the fifth pixel in the image — S903

Process the background panel

Process the color of each channel of the fifth pixel based on a second saturation parameter corresponding to the background panel, to obtain a third color change amount of each channel of the fifth pixel with respect to the processing — S904

Enhance the third color change amount based on a second enhancement parameter corresponding to the background panel, to obtain a fourth color change amount of each channel of the fifth pixel — S905

Determine a color of each channel of the fourth pixel based on the color of each channel of the fifth pixel and the fourth color change amount — S906

TO
FIG. 9B

FIG. 9A

CONT.
FROM
FIG. 9A

Perform blurring processing on the fourth pixel of the background panel | S907

Perform grayscale processing on the fourth pixel of the background panel | S908

Process the second UI element

Process the color of each channel of the fourth pixel based on a third saturation parameter corresponding to the second UI element, to obtain a fifth color change amount of each channel of the fourth pixel with respect to the processing | S909

Enhance the fifth color change amount based on a third enhancement parameter corresponding to the second UI element, to obtain a sixth color change amount of each channel of the fourth pixel | S910

Determine a color of each channel of the third pixel based on the color of each channel of the fourth pixel and the sixth color change amount | S911

Mask the third pixel | S912

Display the second UI element based on the color of each channel of the third pixel | S913

FIG. 9B

Perform blurring processing on a seventh pixel in an image — S1001

Perform grayscale processing on the seventh pixel in the image — S1002

Process a color of each channel of the seventh pixel based on a second saturation parameter, to obtain a seventh color change amount of each channel of the seventh pixel with respect to the processing — S1003

Enhance the seventh color change amount based on a second enhancement parameter, to obtain an eighth color change amount of each channel of the seventh pixel — S1004

Determine a color of each channel of a sixth pixel based on the color of each channel of the seventh pixel and the eighth color change amount — S1005

Display a background panel based on the color of each channel of the sixth pixel — S1006

FIG. 10

FIG. 11

$\sim$
TO
FIG. 12A-b

FIG. 12A-a

Grayscale function y=0.4244x+137.01

1201

CONT.
FROM
FIG. 12A-a
~

1202

| 0 | Grayscale processing | 137 |
| 137 | → | 195 |
| 52 | | 159 |

| 27 | Grayscale processing | 149 |
| 72 | → | 168 |
| 153 | | 202 |

FIG. 12A-b

CONT.
FROM
FIG. 12A-b
~

Saturation
processing+
enhancement
processing

137          74
195    →     244
159          130

Conventional                    74
technology                      220
                                130

~
TO
FIG. 12A-d

Saturation
processing+
enhancement
processing

149          123
168    →     174
202          255

Conventional                    123
technology                      174
                                255

FIG. 12A-c

CONT.
FROM
FIG. 12A-c
~

FIG. 12A-d

a                b                c

FIG. 12B

1301

1302

FIG. 13

● Third-level sub-element
● Fourth-level sub-element
● Fifth-level sub-element

a

● Third-level sub-element
● Fourth-level sub-element
● Fifth-level sub-element

b

FIG. 14

R

G

B

(1)

Grayscale function

(2)

Matrix
3x3

(3)

Enhancement parameter
corresponding to an R channel

Enhancement parameter
corresponding to a G channel

Enhancement parameter
corresponding to a B channel

(4)

Grayscale
processing

Saturation
processing

Enhancement
processing

a

b

c

d

FIG. 15

EP 4 769 135 A1

**10**
**49**

Saturday, July 12
Lunar August 3

FIG. 16a

54

Saturday, July 12
Lunar August 3

FIG. 16b

10:49

Wednesday, July 12 Lunar August 3

Album picture

Happy

Lyrics

Amber Where are we going for dinner tonight? Jinqiao or ...  18:12
10629495607 New stores open, please ...

Amber  08:00
Missed call | Ring for 3 seconds

Balance change  10:08
You purchased a ticket on July 13, 2023, which is estimated to be 144.00 yuan. Please tap to view the bill

FIG. 16c

**10:49** Wednesday, July 12

**Amber**, the plan has changed. The murder mystery game in the weekend is not ...    10:10
**Huang Jing**, I sent you some local specialties SF Express ...
**Music recognition** Maybe reduce carbon emissions

**Balance change**    10:08

Your account 6002 was debited RMB 200.00 via Quick Pay on [Alipay] at 10:05, July 25

**Amber**    10:05
Missed call | Ring for 3 seconds

**Order pick-up reminder - KFC service notification**    10:00
Pick-up number: A0215, restaurant address: Auxiliary Gate 14, Huawei Research Center, Futian district, Longgang District

More notifications    Folded ⌄

**Amber**    08:12
Where are we going for dinner tonight? Jinqiao or Taimao?

FIG. 16d

Electronic device

| Memory 1702 | Power supply 1703 | Communication port 1705 |

1704

| Processor 1701 | Display 1706 |

FIG. 17

## INTERNATIONAL SEARCH REPORT

| International application No. |
|---|
| **PCT/CN2024/138618** |

**A. CLASSIFICATION OF SUBJECT MATTER**

G06F 9/451(2018.01)i

According to International Patent Classification (IPC) or to both national classification and IPC

**B. FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN. CNABS, CNTXT, WOTXT, EPTXT, USTXT, IEEE, ISI, CNKI: 界面, 通道, 像素, 颜色, 变化, 改变, 增加, 减少, 增强, 饱和度, 不同, 显示, interface, channel, pixel, color, variation, enhance, saturation, different, display

**C. DOCUMENTS CONSIDERED TO BE RELEVANT**

| Category* | Citation of document, with indication, where appropriate, of the relevant passages | Relevant to claim No. |
|---|---|---|
| PX | CN 118626189 A (HUAWEI TECHNOLOGIES CO., LTD.) 10 September 2024 (2024-09-10) claims 1-26 | 1-26 |
| A | CN 110865856 A (HUAWEI TECHNOLOGIES CO., LTD.) 06 March 2020 (2020-03-06) abstract, and claims 1-24 | 1-26 |
| A | CN 113436126 A (SHANGHAI AWINIC TECHNOLOGY CO.. LTD.) 24 September 2021 (2021-09-24) entire document | 1-26 |
| A | US 2016246475 A1 (MICROSOFT TECHNOLOGY LICENSING, LLC) 25 August 2016 (2016-08-25) entire document | 1-26 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 January 2025** | **22 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/138618**

| Patent document cited in search report | | | Publication date (day/month/year) | Patent family member(s) | | | Publication date (day/month/year) |
|---|---|---|---|---|---|---|---|
| CN | 118626189 | A | 10 September 2024 | None | | | |
| CN | 110865856 | A | 06 March 2020 | US | 2021209815 | A1 | 08 July 2021 |
| | | | | US | 2022375139 | A1 | 24 November 2022 |
| | | | | WO | 2020042997 | A1 | 05 March 2020 |
| CN | 113436126 | A | 24 September 2021 | None | | | |
| US | 2016246475 | A1 | 25 August 2016 | EP | 3259657 | A1 | 27 December 2017 |
| | | | | WO | 2016133702 | A1 | 25 August 2016 |
| | | | | IN | 201747023172 | A | 07 July 2017 |
| | | | | CN | 107278288 | A | 20 October 2017 |

Form PCT/ISA/210 (patent family annex) (July 2022)

**EP 4 769 135 A1**

**REFERENCES CITED IN THE DESCRIPTION**

**Patent documents cited in the description**

- CN 202410749564